(19) Europäisches Patentamt
European Patent Office
Office européen des brevets

(11) EP 1 860 792 A1

# (12) EUROPEAN PATENT APPLICATION

published in accordance with Art. 158(3) EPC

(43) Date of publication:
**28.11.2007 Bulletin 2007/48**

(21) Application number: **06730674.6**

(22) Date of filing: **30.03.2006**

(51) Int Cl.:
***H04B 7/06*** *(2006.01)* ***H04B 7/10*** *(2006.01)*
***H04J 11/00*** *(2006.01)* ***H04J 15/00*** *(2006.01)*

(86) International application number:
**PCT/JP2006/306726**

(87) International publication number:
**WO 2006/106862 (12.10.2006 Gazette 2006/41)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.03.2005 JP 2005097399**

(71) Applicant: **Matsusita Electric Industrial Co., Ltd.**
**Kadoma-shi, Osaka 571-8501 (JP)**

(72) Inventors:
- **IMAI, Tomohiro**
  **Matsushita Electric Industrial Co. Ltd**
  **2-1-61, Shiromi, Chuo-ku**
  **Osaka 540-6207 (JP)**
- **YUDA, Yasuaki**
  **Matsushita Electric Industrial CO. Ltd**
  **2-1-61, Shiromi, Chuo-ku**
  **Osaka 540-6207 (JP)**

(74) Representative: **Grünecker, Kinkeldey, Stockmair & Schwanhäusser**
**Anwaltssozietät**
**Maximilianstrasse 58**
**80538 München (DE)**

## (54) WIRELESS COMMUNICATION METHOD, WIRELESS COMMUNICATION SYSTEM, AND WIRELESS COMMUNICATION DEVICE

(57) A wireless communication method realizing a large channel capacity even in an environment of high spatial correlation and improving the reception characteristic, a wireless communication system, and a wireless communication device. Signals (X1, X2) are transmitted between antennas (201-1, 201-2) of a base station (200) and antennas (222-1, 222-2) of a mobile station by a space division multiplexing (SDM) system. On the base station (200) side, if channel information estimated by a channel estimating section (204) is known, a weight calculating section (205) calculates a weight, the transmission signal is multiplied by the weight, and diversity transmission from an antenna (201-3) of the base station (200) is carried out. On the mobile station (220) side, the signal transmitted from the base station (200) is received, a signal separating section (203) carries out signal separation of received signals (Y1, Y2), and thereby the transmitted signals (X1, X2) are restored.

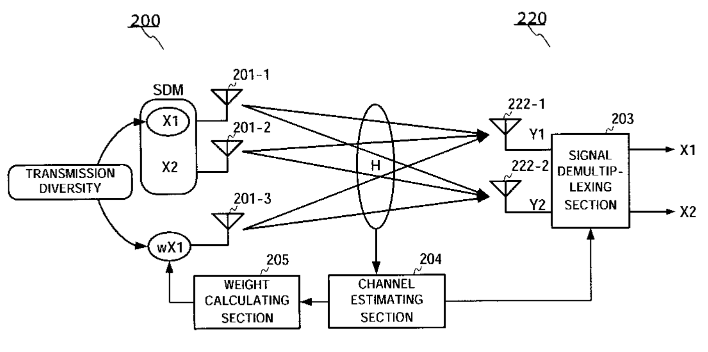


FIG.3

EP 1 860 792 A1

## Description

### Technical Field

The present invention relates to a wireless communication system that receives, by a plurality of antennas, radio signals transmitted from a plurality of antennas and carries out wireless communication, and a wireless communication apparatus and a wireless communication method used in the system.

### Background Art

In recent years, as a technique that realizes high-speed and high-capacity wireless communication in a wireless communication system, MIMO (Multi Input Multi Output) that realizes high frequency utilization efficiency has been considered. For obtaining high channel capacity, a technique as disclosed in Patent Document 1, for example, is known. An outline of an operation of a wireless communication system in Patent Document 1 is shown in FIG.1.

Base station 10 has antennas 201-1 to 201-3 and transmission beam forming section 12, and mobile station 20 has antennas 222-1 to 222-2, reception beam forming section 22, reception weight generating section 24, channel estimating section 204, eigenvalue decomposing section 26 and transmission weight generating section 28.

A transmission weight generated by transmission weight generating section 28 is fed back to base station 10 and then used for transmission weight control in transmission beam forming section 12. In mobile station 20, a reception weight generated by reception weight generating section 24 is used for reception weight control in reception beam forming section 22, and, by making channels orthogonal to each other, there is no apparent interference in the same channel, and higher channel capacity is obtained.

Patent Document 1: Japanese Patent Application Publication Laid-Open No.2003-528527 (page 57, FIG.1A)

### Disclosure of Invention

### Problems to be Solved by the Invention

However, in the wireless communication system described in Patent Document 1, there is a problem that, when the value of spatial correlation which is a correlation value between channels is high, the apparent number of streams decreases, and channel capacity is substantially reduced, compared to the case where the spatial correlation is low.

It is therefore an object of the present invention to provide a wireless communication method, a wireless communication system and a wireless communication apparatus that make it possible to realize high channel capacity even in an environment where spatial correlation is high and improve the reception characteristic.

### Means for Solving the Problem

A wireless communication method carried out by a first wireless communication apparatus having a plurality of first antennas and a second wireless communication apparatus having a plurality of second antennas, the method includes: a detection step of detecting presence or occurrence of an unused antenna in the first wireless communication apparatus, the unused antenna being not performing communication with the second wireless communication apparatus; a received quality measurement step of measuring received quality of a pilot signal transmitted from the second wireless communication apparatus; a transmission diversity selection step of selecting any of different signals to be simultaneously transmitted from the plurality of first antennas based on the received quality, as a signal to which transmission diversity is applied using the unused antenna; and a transmission step of transmitting transmission signals to the second wireless communication apparatus from the antennas of the first wireless communication apparatus.

A wireless communication system of the present invention employs the configuration having: a first wireless communication apparatus having a plurality of first antennas; and a second wireless communication apparatus having a plurality of second antennas, wherein: the first wireless communication apparatus comprises: a detecting section that detects presence or occurrence of an unused antenna being not performing communication with the second wireless communication apparatus; a received quality measuring section that measures received quality of a pilot signal transmitted from the second wireless communication apparatus; a transmission diversity selecting section that selects any of different signals to be simultaneously transmitted from the plurality of first antennas based on the received quality, as a signal to which transmission diversity is applied using the unused antenna; and a transmitting section that transmits transmission signals to the second wireless communication apparatus from the antennas of the first wireless communication apparatus; and the second wireless communication apparatus comprises: a receiving section that receives the transmission signals transmitted from the first wireless communication apparatus; a channel estimating section that calculates a channel estimation value for MIMO channels formed between the plurality of first antennas and the plurality of second antennas based on a pilot signal among the received signals; and a signal demultiplexing section that demultiplexes the received signals based on the channel estimation value.

A wireless communication apparatus of the present invention employs the configuration having: a plurality of first antennas that receive radio signals of a first MIMO channel and transmit radio signals through a second MIMO channel; a detecting section that detects presence or occurrence of an unused antenna being not performing communication out of the plurality of first antennas; a received quality measuring section that measures received quality of a pilot signal transmitted from a communicating party; a transmission diversity selecting section that selects any of different signals to be simultaneously transmitted from the plurality of first antennas based on the received quality, as a signal to which transmission diversity is applied using the unused antenna; and a transmitting section that transmits transmission signals from the plurality of first antennas.

Advantageous Effect of the Invention

According to the present invention, even in an environment where spatial correlation is high, it is possible to realize high channel capacity and improve the reception characteristic.

Brief Description of Drawings

FIG.1 is an illustrative diagram showing an outline of an operation of a wireless communication system in Patent Document 1;
FIG.2 is a flowchart showing an operation of a wireless communication system according to Embodiment 1 of the present invention;
FIG.3 is a conceptual diagram showing a configuration of the wireless communication system according to Embodiment 1 of the present invention;
FIG.4 is an illustrative diagram showing an outline of channels between a base station and a mobile station according to Embodiment 1 of the present invention;
FIG.5 is a block diagram showing a configuration of a base station according to Embodiment 1 of the present invention;
FIG.6 is a flowchart showing an operation of a transmission diversity signal selecting section according to Embodiment 1 of the present invention;
FIG.7 is a block diagram showing a detailed configuration of a transmission weight generating section according to Embodiment 1 of the present invention;
FIG.8 is a flowchart showing processing steps for weight generation determination in the transmission weight generating section according to Embodiment 1 of the present invention;
FIG.9 is a block diagram showing a detailed configuration of a channel monitoring section according to Embodiment 1 of the present invention;
FIG.10 is a conceptual graph illustrating temporal fluctuation of channel estimation information according to Embodiment 1 of the present invention;
FIG.11A is an illustrative graph showing a relationship between a channel determinant and spatial correlation according to Embodiment 1 of the present invention;
FIG.11B is an illustrative graph showing a relationship between spatial correlation and channel capacity according to Embodiment 1 of the present invention;
FIG.12A is an illustrative graph showing a relationship among vector X before being multiplied by a transmission weight, vector Y and vector wX according to Embodiment 1 of the present invention;
FIG.12B is an illustrative graph showing a relationship among vector wX after being multiplied by the transmission weight, vector Y and combined vector wX+Y, and equation 23 according to Embodiment 1 of the present invention;
FIG.13A is a second illustrative graph showing a relationship between spatial correlation and channel capacity according to Embodiment 1 of the present invention;
FIG.13B is a second illustrative graph showing a relationship between a channel determinant and spatial correlation according to Embodiment 1 of the present invention;
FIG.14 is an illustrative graph showing a relationship among vectors X, Y and wX, combined vectors X+Y and wX+Y and a determinant of a reception estimation channel matrix according to Embodiment 1 of the present invention;
FIG.15 is a block diagram showing a configuration of a mobile station according to Embodiment 1 of the present invention;
FIG.16 is a block diagram showing a configuration of a base station according to Embodiment 2 of the present invention;
FIG.17 is a block diagram showing a detailed configuration of a transmission power and weight controlling section according to Embodiment 2 of the present invention;

FIG.18 (a) is an illustrative graph showing a relationship among vector X before being multiplied by a transmission weight, vector Y, and vector P1Y obtained by multiplying the vector Y by power distribution P1, according to Embodiment 2 of the present invention, FIG.18(b) is an illustrative graph showing a relationship among the vector P1Y, vector wX, and combined vector wX+P1Y, according to Embodiment 2 of the present invention, and FIG.18 (c) is an illustrative graph showing a relationship between vector P2(wX+P1Y) multiplied by power distribution P2 and equation 41, according to Embodiment 2 of the present invention;

FIG.19 is a block diagram showing a configuration of a base station according to Embodiment 3 of the present invention;

FIG.20A is an illustrative graph of pilot reception SNR characteristics at a first antenna according to Embodiment 3 of the present invention;

FIG.20B is an illustrative graph of pilot reception SNR characteristics at a second antenna according to Embodiment 3 of the present invention;

FIG.20C is an illustrative graph of assignment of diversity subcarrier signals according to Embodiment 3 of the present invention;

FIG.21 is a flowchart showing an operation of a diversity subcarrier selecting section according to Embodiment 3 of the present invention; and

FIG.22 is a block diagram showing a configuration of amobile station according to Embodiment 3 of the present invention.

## Best Mode for Carrying Out the Invention

Embodiments of the present invention will be described in detail below with reference to the accompanying drawings. Further, in the following embodiments, a case will be described as an example where, in a mobile wireless communication system using a MIMO technique, channel information is known on a transmitting side by feedback or the like, a base station has a larger number of antennas than a mobile station, and communication is carried out from the base station to the mobile station. Further, for clarityof description, although a case will be described where the number of base station antennas is three and the number of mobile station antennas is two, the present invention is not limited thereto.

Further, a base station may be called "BS" (Base Station) or "Node B", and a mobile station may be called "MS" (Mobile Station) or "UE" (User Equipment). Although, in the following description, a first wireless communication apparatus is a base station and a second wireless communication apparatus is a mobile station, the content of the present invention is not limited thereto, and the first wireless communication apparatus may be a mobile station and the second wireless communication apparatus may be a base station.

### (Embodiment 1)

FIG.2 illustrates an operational sequence of a wireless communication system according to Embodiment 1 of the present invention. A base station detects an antenna that is not currently in use (hereinafter, "unused antenna") (step S100), and, when it is determined to newly use this antenna, the base station requests a mobile station to transmit a pilot signal (step S102).

In response to the pilot transmission request, the mobile station transmits an uplink pilot signal to the base station. At this time, the base station keeps the unused antenna in an available state and receives the pilot signal by all antennas including antennas having been in communication up to now and the unused antenna (step S104).

The base station carries out channel estimation and measurement of the pilot reception SNR using the received pilot signal (step S106). A signal to be diversity-transmitted from the unused antenna is selected through the measurement of the pilot reception SNR. A transmission weight is calculated using the signal selection information and channel estimation information, and a transmission signal is generated (step S108).

Subsequently, a downlink pilot signal and data are transmitted from the base station to the mobile station (step S110). The mobile station carries out channel estimation using the downlink pilot signal and demultiplexes the received signal to obtain the received data (step S112).

FIG.3 is a conceptual diagram showing a configuration of a wireless communication system according to Embodiment 1 of the present invention. In FIG.3, a first wireless communication apparatus is base station 200, and a second wireless communication apparatus is mobile station 220.

Base station 200 has antennas 201-1, 201-2 and 201-3, and mobile station 220 has antennas 222-1 and 222-2, signal demultiplexing processing section 203, channel estimating section 204 and weight calculating section 205. In Embodiment 1, it is assumed that antenna 201-3 of base station 200 is an unused antenna and this antenna is newly used.

Signals X1 and X2 are transmitted between base station 200 and mobile station 220 using space division multiplexing (SDM). Furthermore, weight is calculated by weight calculating section 205 based on the channel information estimated by channel estimating section 204 of mobile station 220, and the calculated weight is fed back to base station 200. Base station 200 multiplies transmission signal X1 transmitted from the unused antenna by weight w, and thereby the combined use of space division multiplexing transmission and diversity transmission is realized.

Mobile station 220 receives transmission signals and carries out signal demultiplexing processing on received signals Y1 and Y2 in signal demultiplexing processing section 203, and thereby the transmission signals X1 and X2 are restored.

The definition of the channel estimated by channel estimating section 204 of mobile station 220 in FIG.3 will be described. FIG.4 shows the states of channels formed between antennas 201-1 to 201-3 of base station 300 and antennas 222-1 and 222-2 of mobile station 320.

The channel formed between antenna 201-1 of base station 300 and antenna 222-1 of mobile station 320 is "$h_{11}$", the channel formed between antenna 201-2 of base station 300 and antenna 222-1 of mobile station 320 is "$h_{12}$", and the channel formed between antenna 201-3 of base station 300 and antenna 222-1 of mobile station 320 is "$h_{13}$". Further, the channel formed between antenna 201-1 of base station 300 and antenna 222-2 of mobile station 320 is "$h_{21}$", the channel formed between antenna 201-2 of base station 300 and antenna 222-2 of mobile station 320 is "$h_{22}$", and the channel formed between antenna 201-3 of base station 300 and antenna 222-2 of mobile station 320 is "$h_{23}$".

FIG.5 is a block diagram showing a configuration of base station 400 according to Embodiment 1 of the present invention. In the present embodiment, in FIG.3, initially, although communication is carried out with mobile station using two base station antennas 201-1 and 201-2, antenna controlling section 403 (described later) that monitors the state of antenna use detects occurrence of one unused antenna 201-3. Hereinafter, a state will be described as an example where, by enabling the unused antenna to be newly used for communication with mobile station 220, the number of used antennas becomes three.

In FIG.5, base station 400 has S/P converting section 401, two modulating sections 402-1 and 402-2, number-of-antenna determining section 404, antenna controlling section 403, power controlling section 405, three RF transmitting sections 406-1 to 406-3, three antennas 201-1 to 201-3, three RF receiving sections 408-1 to 408-3, pilot reception SNR measuring section 409, transmission diversity signal selecting section 410, transmission weight generating section 411, multiplier 412, channel estimating section 413, signal demultiplexing section 414, channel monitoring section 415, two demodulating sections 416-1 and 416-2 and P/S converting section 417.

First, the operation of transmitting transmission data from antennas 201-1 to 201-3 in base station 400 to a mobile station will be described.

S/P converting section 401 converts the inputted transmission data to parallel data corresponding to the number of space division multiplexing and then inputs the parallel data to modulating sections 402-1 and 402-2.

Modulating sections 402-1 and 402-2 modulate the inputted transmission data, and then input the modulated data to transmission diversity signal selecting section 410 and number-of-antenna determining section 404.

Antenna controlling section 403 serving as a detecting means controls the number of antennas used per user. When an unused antenna occurs or is present, antenna controlling section 403 can detect the occurrence or presence. When an unused antenna occurs or is present, antenna controlling section 403 generates an antenna control signal so as to assign the unused antenna to a user being currently in communication and inputs the antenna control signal to number-of-antenna determining section 404. By contrast, when accommodating a new user, antenna controlling section 403 generates a control signal to instruct a user who uses the number of antennas equal to or larger than the number of antennas owned by a mobile station, to reduce the number of used antennas, and inputs the control signal to number-of-antenna determining section 404.

Number-of-antenna determining section 404 receives an antenna control signal and increases or reduces the number of antennas used per user. Here, the signals modulated by modulating sections 402-1 and 402-2 and a signal obtained by multiplying the signal outputted from transmission diversity signal selecting section 410 by transmission weight information in multiplier 412, are inputted to number-of-antenna determining section 404, and the signal multiplied by the transmission weight information is turned on or off according to the antenna control signal.

Power controlling section 405 controls signal power of the signals which are inputted from number-of-antenna determining section 404 and outputted to RF transmitting sections 406-1 to 406-3, so that transmission power from each antenna is constant according to an increase or decrease of the number of antennas used per user. In addition, power determined by power controlling section 405 is inputted to transmission weight generating section 411 as transmission power information.

RF transmitting sections 406-1 to 406-3 each have a band-pass filter, a digital/analog converter, a low noise amplifier, and the like. RF transmitting sections 406-1 to 406-3 carry out up-conversion on signals which are inputted from transmission power controlling section 405 and correspond to antennas 201-1 to 201-3, and radio transmit the signals to the mobile station via antennas 201-1 to 201-3.

Next, the operation of receiving a transmission signal at base station 400 from mobile station 1400 (descried later) will be described.

Antennas 201-1 to 201-3 capture radio signals transmitted from the mobile station which is a communicating party and input the received signals to RF receiving sections 408-1 to 408-3.

RF receiving sections 408-1 to 408-3 each have a band-pass filter, an analog/digital converter, a low noise amplifier, and the like. RF receiving sections 408-1 to 408-3 carry out down-conversion on the inputted signals and input the signals to signal demultiplexing section 414. Also, at this time, RF receiving sections 408-1 to 408-3 extract pilot signals and input the pilot signals to channel estimating section 413 and pilot reception SNR measuring section 409.

Pilot reception SNR measuring section 409 calculates, based on the inputted pilot signals, average pilot reception SNR (pilot signal power to noise power ratio) for each antenna and inputs the average pilot reception SNRs to transmission diversity signal selecting section 410 as reception SNR information.

Based on the pilot reception SNR information inputted from pilot reception SNR measuring section 409, transmission diversity signal selecting section 410 selects, from the signals inputted from modulating sections 402-1 and 402-2, a signal that should be transmitted from an antenna where pilot reception SNR is determined low, as a transmission diversity signal, and outputs the signal. This is because, by applying diversity to a signal being transmitted through a worse propagation path, the reception characteristic is more significantly improved. In addition, information (selection result) as to which one of the signals outputted from modulating sections 402-1 and 402-2 is outputted from transmission diversity signal selecting section 410 is inputted to transmission weight generating section 411 as selected signal information.

Transmission weight generating section 411 generates transmission weight information based on the selected signal information inputted from transmission diversity signal selecting section 410, the transmission power information inputted from power controlling section 405, and the channel information inputted from channel monitoring section 415, which will be described later, and outputs the transmission weight information to multiplier 412.

Channel estimating section 413 calculates a channel estimation value based on the inputted pilot signal and inputs the calculated channel estimation value to signal demultiplexing section 414 and channel monitoring section 415.

Signal demultiplexing section 414 demultiplexes, by a predetermined scheme, the signals inputted from RF receiving sections 408-1 to 408-3 based on the channel estimation value inputted from channel estimating section 413.

Channel monitoring section 415 monitors temporal fluctuation of the channel. This is intended to prevent the reception characteristic from deteriorating as a result of a transmission weight becoming inaccurate due to temporal fluctuation of the channel. Specifically, channel monitoring section 415 decides whether or not a multiplication of a transmission weight is carried out based on the channel estimation value inputted from channel estimating section 413 and inputs the result of decision to transmission weight generating section 411 as channel information.

Demodulating sections 416-1 and 416-2 demodulate the received signals demultiplexed by and outputted from signal demultiplexing section 414 and input the demodulated signals to P/S converting section 417.

P/S converting section 417 converts the inputted received data corresponding to the number of space division multiplexing into serial data and outputs the data as received data.

Next, the operations of pilot reception SNR measuring section 409, transmission diversity signal selecting section 410, transmission weight generating section 411, channel monitoring section 415 and transmission weight generating section 411 will be described in detail.

First, a process of generating reception SNR information to be outputted from pilot reception SNR measuring section 409 will be described. It is assumed that pilot signals are transmitted from the mobile station to the base station and the transmission power of the pilot signals is 1 for ease of explanation. When the average pilot reception SNRs at the base station antennas 201-1 and 201-2 are SNR1 and SNR2, respectively, and reception noise powers are $N_1$ and $N_2$, SNR1 and SNR2 which are the average pilot reception SNRs at the antennas 201-1 and 201-2 can be expressed by equation 1.

In FIG.5, SNR1 and SNR2 are inputted to transmission diversity signal selecting section 410 as reception SNR information. Here, as with antennas 201-1 and 201-2, antenna 201-3 which is an unused antenna also receives the pilot signal transmitted from the mobile station to the base station. However, the pilot signal received by antenna 201-3 is intended to use for channel estimation and thus is not a target for measurement of pilot reception power in pilot reception SNR measuring section 409.

[1]

$$SNR1 = \overline{\left(|h_{11}|^2 + |h_{21}|^2\right)/N_1}$$
$$SNR2 = \overline{\left(|h_{12}|^2 + |h_{22}|^2\right)/N_2} \quad \cdots \text{(Equation 1)}$$

Further, in this case, the pilot reception SNR is referred to as a criterion for selecting a transmission diversity signal, but pilot reception power, a pilot reception SIR (signal to interference ratio), a pilot reception SINR (signal to interference and noise ratio), or the like may be measured, and measurement information may be inputted to transmission diversity signal selecting section 410.

When pilot reception power is used as the selection criterion, measurement of noise power is not necessary. Further, when interference is dominant as a signal degradation factor on the base station side that receives pilots, by using a pilot reception SIR as the selection criterion, it is possible to select a diversity signal where the influence of interference is taken into consideration and thus improve the reception characteristic. Further, by using a pilot reception SINR as the selection criterion, it is possible to select a diversity signal where the influence of both noise and interference is taken into consideration and thus improve the reception characteristic in an environment where both noise and interference are present.

Further, although pilot reception SNR measuring section 409 is shown in FIG.5, as described above, it may be a received quality measuring section that measures received quality of a received signal, as a broader concept.

Next, the operation of transmission diversity signal selecting section 410 will be described in detail.

FIG.6 is a flowchart showing a signal selection operation of transmission diversity signal selecting section 410. The signal outputted from modulating section 402-1 is X1, and the signal outputted frommodulating section 402-2 is X2.

First, at step S510, reception SNR information SNR1 and SNR2 are received from pilot reception SNR measuring section 409. Subsequently, at step 5520, pilot reception SNRs at antennas 201-1 and 201-2 are compared to determine which path is worse. It is considered that the bit error rate degrades in a poor path, and therefore it is intended to improve the degradation by diversity transmission.

At step S520, it is determined whether or not SNR1 which is the reception SNR at antenna 201-1 is equal to or higher than SNR2 which is the reception SNR at antenna 201-2. If SNR1 is equal to or higher than SNR2, it is determined that a path leading to antenna 201-2 is worse and thus subsequent to step S520, step 5530-1 is carried out.

On the other hand, if, at step S520, SNR2 which is the reception SNR at antenna 201-2 is higher than SNR1 which is the reception SNR at antenna 201-1, it is determined that a path leading to antenna 201-1 is worse, and thus subsequent to step S520, step S530-2 is carried out.

At step S530-1, signal X2 is selected as a transmission diversity signal and outputted, and, at step 5530-2, signal X1 is selected as a transmission diversity signal and outputted.

Next, the operation of transmission weight generating section 411 will be described in detail. FIG. 7 is a block diagram showing a detailed configuration of transmission weight generating section 411, and FIG.8 is a flowchart showing processing steps of weight generation determination. Weight generation determining section 611 receives channel information from channel monitoring section 415 in FIG.5 (step S710) and carries out transmission weight generation determination (step 5720) .

If the channel information is 1, phase control information is inputted to weight phase calculating section 631, and weight phase calculating section 631 is controlled so that an output from weight phase calculating section 631 is 0 [rad] (step S730-2). If the channel information is not 1, the channel information is determined to be channel estimation information, and the channel information is inputted to channel determinant calculating section 621 (step S730-1).

Channel determinant calculating section 621 calculates a channel determinant based on the channel estimation information and inputs the channel determinant to weight phase calculating section 631.

In the present embodiment, although both space division multiplexing transmission and diversity transmission are used and thus a channel determinant differs depending on the combination of signals transmitted from the antennas, a channel determinant is calculated based on the selected signal information inputted from transmission diversity signal selecting section 410 and determined. When phase control information is not inputted from weight generation determining section 611, weight phase calculating section 631 determines a phase of a transmission weight based on the channel determinant information inputted from channel determinant calculating section 621.

Further, weight amplitude calculating section 641 calculates an amplitude of a transmission weight based on the transmission power information inputted from power controlling section 405. Weight generating section 651 generates a transmission weight based on the transmission weight phase information inputted from weight phase calculating section 631 and the transmission weight amplitude information inputted from weight amplitude calculating section 641 and then outputs the transmission weight.

Next, the operation of channel monitoring section 415 will be described in detail. FIG.9 is a block diagram showing a detailed configuration of channel monitoring section 415. Channel monitoring section 415 includes buffer section 815, delay section 825 having the delay amount expressed by equation 2, channel correlation calculating section 835 and channel fluctuation determining section 845.

[2]

$$Z^{-1} \quad \cdots \text{(Equation 2)}$$

Buffer section 815buffers the channel estimation information estimated by channel estimating section 413 shown in FIG.5. FIG.10 shows a state of channel fluctuation that changes over time. The horizontal axis in FIG.10 represents the time, and the vertical axis represents the channel complex amplitude. Further, point A in FIG.10 represents a channel complex amplitude at sampling time t1-δt, and point B represents channel complex amplitude H at sampling time t1, and points A and B have values of H(t1-δt) and H(t1), respectively.

Now, it is assumed that channel estimating section 413 estimates channel H(t) at sampling interval δt.

It is assumed that buffer section 815 buffers the channel estimation information estimated at a given sampling time and the channel estimation information is sequentially updated.

Channel correlation calculating section 835 calculates correlation between the channel estimation information estimated by channel estimating section 413 shown in FIG.5 and the channel estimation information which is outputted from buffer section 815 and delayed by the delay amount expressed by equation 2 by delay section 825.

In FIG.10, when the channel estimation information estimated at sampling time t1 is H(t1), the channel estimation information estimated at t1-δt which is one sampling time before t1 is H (t1-δt), and a channel correlation value is ρ, ρ can be expressed by equation 3. E[ ] in equation 3 represents an ensemble average. Further, a channel element of H (t1) is expressed by equation 4, and a channel element of H(t1-δt) is expressed by equation 5. Here, if it is considered that equations 4 and 5 are two different elements in given matrix H, ρ represents spatial correlation.

[3]

$$\rho = \frac{E\left[h_{ij}^{*} h_{ij}^{'}\right]}{\sqrt{E\left[h_{ij}^{2}\right]}\sqrt{E\left[h_{ij}^{'2}\right]}} \quad \cdots \text{(Equation 3)}$$

[4]

$$h_{ij} \quad \cdots \text{(Equation 4)}$$

[5]

$$h_{ij}^{'} \quad \cdots \text{(Equation 5)}$$

Channel fluctuation determining section 845 determines channel fluctuation based on the channel correlation information inputted from channel correlation calculating section 835. If the channel correlation information is equal to or higher than a predetermined threshold, it is determined that there is channel fluctuation, and thus 1 is outputted as channel information. If the channel correlation information is less than the predetermined threshold, it is determined that channel fluctuation is a little, and thus the channel estimation information inputted from channel estimating section 413 shown in FIG.5 is outputted as channel information.

Finally, the operation of transmission weight generating section 411 will be described in detail. Here, transmission weight w generated by transmission weight generating section 411 will be described. When the amplitude of transmission weight w is u and the phase is θ, w can be expressed by equation 6.

[6]

$$w = ue^{j\theta} \quad \cdots \text{(Equation 6)}$$

Amplitude u is determined by the transmission power information inputted from power controlling section 405. Generally, in a wireless communication system, maximum transmittable power is specified. Hence, when there are a plurality of antennas, power is distributed among the antennas, and the transmission power of the signal transmitted from each antenna is controlled so as not to exceed the maximum transmittable power. The present embodiment adopts a configuration where power controlling section 405 equally distributes power among the antennas. For example, when the total transmission power which is maximum transmittable power is 1 and the number of transmitting antennas is three, power is the second power of an amplitude value, and thus amplitude u is expressed by equation 7.

[7]

$$u = 1/\sqrt{3} \quad \cdots \text{(Equation 7)}$$

Phase θ is determined by the channel information inputted from channel monitoring section 415. When the channel information is 1, phase θ is set to 0 [rad]. On the other hand, when the channel information is not 1, the phase is determined based on a method shown below.

First, channel information will be described. A state where MIMO channels are formed will be described using FIG. 4. In FIG. 4, by a MIMO system having three base station antennas and two mobile station antennas, six different channel elements $h_{11}$ to $h_{23}$ are formed and estimated by channel estimating section 413. Generally, MIMO channels are expressed by a matrix. Hereinafter, the channel elements estimated by channel estimating section 413 are expressed by 3×2 channel matrix H expressed by equation 8.

[8]

$$H = \begin{bmatrix} h_{11} & h_{12} & h_{13} \\ h_{21} & h_{22} & h_{23} \end{bmatrix} \quad \cdots \text{(Equation 8)}$$

In the present embodiment, both space division multiplexing transmission and diversity transmission are used, and therefore, when data signals are transmitted from the base station, the same data signal is transmitted from two antennas, and a data signal different from the aforementioned data signals is transmitted from the other one antenna. That is, as shown in FIG.3, when data signal X1 is transmitted from antennas 201-1 and 201-3 and data signal X2 is transmitted from antenna 201-2, received signals Y1 and Y2 at antennas 222-1 and 222-2 can be expressed by equation 9.

[9]

$$\begin{bmatrix} y_1 \\ y_2 \end{bmatrix} = \begin{bmatrix} h_{11} & h_{12} & h_{13} \\ h_{21} & h_{22} & h_{23} \end{bmatrix} \begin{bmatrix} x_1 \\ x_2 \\ x_1 \end{bmatrix} \quad \cdots \text{(Equation 9)}$$

When equation 9 is expanded and simplified, received signals Y1 and Y2 can be expressed by equation 10.

[10]

$$\begin{bmatrix} y_1 \\ y_2 \end{bmatrix} = \begin{bmatrix} (h_{11}+h_{13})x_1 + h_{12}x_2 \\ (h_{21}+h_{23})x_1 + h_{22}x_2 \end{bmatrix} = \begin{bmatrix} h_{11}+h_{13} & h_{12} \\ h_{21}+h_{23} & h_{22} \end{bmatrix} \begin{bmatrix} x_1 \\ x_2 \end{bmatrix} \quad \cdots \text{(Equation 10)}$$

As shown in equation 10, when both space division multiplexing transmission and diversity transmission are used, although, originally, a 3x2 channel matrix is present in a propagation path, a receiving side has a 2x2 channel matrix. This is called the "degeneracy of a matrix". The degeneracy of a matrix is phenomenon depending on the number of space division multiplexing and the number of transmitting and receiving antennas. For example, when the number of transmitting antennas is four, the number of receiving antennas is two, and the number of space division multiplexing is two, a 4x2 channel matrix is present in a propagation path, but, on the receiving side, the channel matrix is degenerated to a 2×2 channel matrix.

In the present embodiment, it is assumed that antenna 201-3 is an unused antenna and this antenna is newly used, and therefore the signal to be transmitted from antenna 201-3 is multiplied by a transmission weight. In a wireless communication system having three base station antennas and two mobile station antennas, when both space division multiplexing transmission and diversity transmission are used, the same data signal is transmitted from the two antennas. This data signal is X1. Further, a data signal different from the aforementioned data signal is transmitted from the other one antenna. This data signal is X2.

Several combinations can be considered as to from which one of antennas 201-1 to 201-3 data signals X1 and X2 are transmitted, but here, it is assumed that X1 is transmitted from antenna 201-1, X2 is transmitted from antenna 201-2, and X1 is transmitted from antenna 201-3. Further, data signal X1 transmitted from antenna 201-3 is multiplied by a weight expressed by equation 4.

Phase θ of a weight expressed by equation 3 is expressed by equation 11 using elements of a channel matrix. In equation 11, α represents the degree of improvement in determinant, and $0<\alpha\leq 1$. The phase is determined so that the determinant is maximum when $\alpha=1$. The range and value of α are determined by, for example, a system requirement. α may be a specified fixed value or may be a variable value that varies according to a propagation environment.

[11]

$$\theta = \alpha\{\arg(h_{11}h_{22} - h_{21}h_{12}) - \arg(h_{22}h_{13} - h_{12}h_{23})\} \quad \cdots \text{(Equation 11)}$$

Here, the reason that a determinant of a channel matrix is used to derive a phase of a transmission weight and a process of deriving a transmission weight will be described. A relationship among a determinant using the Kronecker model, which is a generic correlation channel model, spatial correlation and channel capacity is shown in FIGs.11A and 11B. The spatial correlation represents an average of correlation values between elements of a channel matrix, and will be described in detail later. A value of the channel determinant is calculated using an average of absolute values.

The Kronecker model is expressed by equation 12, and A represents a channel matrix in the Kronecker model. Equation 13 represents a non-correlated Rayleigh channel (average is 0 and distribution is 1), equation 14 represents the number of receiving antennas, equation 15 represents the number of transmitting antennas, and ρ represents the spatial correlation coefficient ($0\leq\rho\leq 1$).

[12]

$$A = \frac{1}{\sqrt{tr[R_r]}}\sqrt{R_r}A_{iid}\sqrt{R_t}^T$$
$$R_r = teopliz[1, \rho, \rho^2, \Lambda, \rho^{m_r-1}] \quad \cdots \text{(Equation 12)}$$
$$R_t = teopliz[1, \rho, \rho^2, \Lambda, \rho^{m_t-1}]$$

[13]

$$A_{iid} \quad \cdots \text{(Equation 13)}$$

[14]

$$m_r \quad \cdots \text{(Equation 14)}$$

[15]

$$m_t \quad \cdots \text{(Equation 15)}$$

FIG. 11A shows a relationship between the absolute value of a determinant of matrix A and spatial correlation, and FIG.11B shows a relationship between spatial correlation and channel capacity. The horizontal axis represents the real part of a complex number, and the vertical axis represents the imaginary part.

In FIG.11A, the determinant of matrix A, that is, such a characteristic curve is plotted that when the absolute value of equation 16 is 0, the spatial correlation value passes through the point of 1, when the absolute value of equation 16 is 0.2, the spatial correlation value passes through the point of about 0.8, when the absolute value of equation 16 is 0.5, the spatial correlation value passes through the point of 0.4, and, when the absolute value of equation 16 is about 0.58, the spatial correlation value passes through the point of 0, respectively, and, in accordance with an increase in the absolute value of equation 16, the spatial correlation monotonously decreases. When the absolute value of equation 16 becomes higher, the spatial correlation becomes closer to 0.

[16]

$$\det(A) \quad \cdots \text{(Equation 16)}$$

In FIG. 11B, such a characteristic curve is plotted that when the spatial correlation value is 0, the channel capacity passes through the point of about 1.68, when the spatial correlation value is 0.4, the channel capacity passes through the point of about 1.62, when the spatial correlation value is 0.8, the channel capacity passes through the point of about 1.45, and, when the spatial correlation value is 1, the channel capacity passes through the point of about 1.32, respectively, and, in accordance with an increase in spatial correlation value, the channel capacity value monotonously decreases . When the spatial correlation becomes closer to 0, the channel capacity becomes higher.

A determinant is defined only for a square matrix, and a minimum configuration in an actual MIMO wireless communication system is premised, and therefore FIG.11 shows trends for the case of a 2×2 matrix where the number of transmitting antennas is two and the number of receiving antennas is two. Although the absolute value of detA and the channel capacity change through the average and distribution of a non-correlated Rayleigh channel, the same trends can be obtained for the relationship between the spatial correlation and the absolute value of equation 16 and the relationship between the spatial correlation and the channel capacity.

Further, when the number of transmitting and receiving antennas are three ormore, that is, a 3×3 matrix, a 4×4 matrix, or a higher matrix, the same trends can be obtained for the relationship between the spatial correlation and the absolute value of equation 16 and the relationship between the spatial correlation and the channel capacity.

From the relationship between the spatial correlation and the absolute value of equation 16 and the relationship between the spatial correlation and the channel capacity shown in FIGs . 11A and 11B, a relationship between the absolute value of equation 16 and the channel capacity can be derived. That is, the spatial correlation value decreases when the absolute value of equation 16 increases, so that the channel capacity increases. Hence, a spatial correlation value and an absolute value of determinant equation 16 are determined so as to further increase the channel capacity, and a transmission weight is determined based on the spatial correlation value and the absolute value of determinant equation 16.

In the present embodiment, it is assumed that antenna 201-3 is an unused antenna and this antenna is newly used, and therefore a signal to be transmitted from antenna 201-3 is multiplied by a transmission weight. In a wireless communication system having three base station antennas and two mobile station antennas, when both space division multiplexing transmission and diversity transmission are used, the same data signal is transmitted from two antennas. This data signal is X1. A data signal different from the aforementioned data signal is transmitted from the other one antenna. This data signal is X2.

In a wireless communication system having three base station antennas and two mobile station antennas, when both space division multiplexing transmission and diversity transmission are used with the base station being a transmitting side and the mobile station being a receiving side, as shown in equation 10, the channel matrix estimated at the receiving side is degenerated to 2x2. Further, when the signal to be transmitted from base station antenna 201-3 is multiplied by a transmission weight and then transmitted, a channel matrix is degenerated to 2×2. When the channel matrix (hereinafter, a "reception estimation channel matrix") estimated in the receiving side is the one expressed by equation 17, equation 17 is expressed by equation 18.

[17]

$$H_w \quad \cdots \text{(Equation 17)}$$

[18]

$$H_w = \begin{bmatrix} h_{11} + wh_{13} & h_{12} \\ h_{21} + wh_{23} & h_{22} \end{bmatrix} \quad \cdots \text{(Equation 18)}$$

Channel determinant equation 19 of equation 18 is calculated as shown in equation 20.

[19]

$$\det(H_w) \quad \cdots \text{(Equation 19)}$$

[20]

$$\begin{aligned} \det(H_w) &= h_{22}(h_{11} + wh_{13}) - h_{12}(h_{21} + wh_{23}) \\ &= w(h_{22}h_{13} - h_{12}h_{23}) + (h_{22}h_{11} - h_{12}h_{21}) \end{aligned} \quad \cdots \text{(Equation 20)}$$

When equations 21 and 22 are assigned to equation 20, equation 20 can be expressed by equation 23.

[21]

$$h_{22}h_{13} - h_{12}h_{23} = X \quad \cdots \text{(Equation 21)}$$

[22]

$$h_{22}h_{11} - h_{12}h_{21} = Y \quad \cdots \text{(Equation 22)}$$

[23]

$$\det(H_w) = wX + Y$$
$$\begin{cases} X = h_{22}h_{13} - h_{12}h_{23} \\ Y = h_{22}h_{11} - h_{12}h_{21} \end{cases} \quad \cdots \text{(Equation 23)}$$

FIG.12A shows relationships between vector X before being multiplied by a transmission weight and vector Y and between vector wX after being multiplied by a transmission weight and the vector Y, and FIG.12B shows a relationship between a combined vector of vector wX multiplied by the transmission weight and vector Y and an absolute value of a determinant of a reception channel matrix. Generally, a channel in a wireless communication path provides complex amplitude fluctuation and phase fluctuation, and thus, when a channel state is shown by a vector, it is depicted on a complex plane. The horizontal axis in FIG. 12 represents the real part of a complex number, and the vertical axis represents the imaginary part of the complex number.

In FIG.12A, angle φ formed by vector X1101 before being multiplied by a transmission weight and vector Y1102 is Φ. A vector obtained by multiplying vector X1101 by transmission weight w is vector wX1103. Now, it is assumed that angle formed by vectors wX1103 and Y1102 (equation 24) is 0.

In FIG.12B, combined vector (wX+Y) 1104 is obtained by geometrically moving a starting point of vector wX1103 to end point A of vector Y1102 in parallel and combining vectors wX1103 and Y1102.

It can be seen from equation 23 that the absolute value of determinant equation 19 is equal to combined vector (wX+Y) 1104 of two complex vectors wX1104 and Y1102, that is, the length (magnitude) from origin point O to point B. Furthermore, from FIG. 12B, when the angle formed by vectors wX1103 and Y1102 (equation 24) is 0, the magnitude of combined vector (wX+Y) 1104 is maximum.

Accordingly, if equation 24 can be made smaller than Φ by multiplying vector X1101 by transmission weight w and providing phase rotation θ to the direction of vector Y1102 in FIG.12A, the magnitude of determinant equation 19 can be made higher than the current level, that is, the one before being multiplied by the transmission weight. At this time, the range of the angle formed by vectors wX and Y (equation 24) can be expressed by equation 25.

[24]

$$\phi_w \quad \cdots \text{(Equation 24)}$$

[25]

$$0 \le \phi_w < \Phi \quad \cdots \text{(Equation 25)}$$

It will be understood from equation 25 that when equation 24 is 0, that is, when vectors wX1103 and Y1102 have the same phase, the absolute value of determinant equation 19 is maximum as shown in FIG. 12B, and the absolute value is most preferable. At this time, phase rotation amount θ by weight w is Φ. However, when the relationship of equation 25 is satisfied, the magnitude of determinant equation 19 becomes higher than the current level. From the above fact, when θ is expressed using X and Y, θ can be expressed by equation 26.

[26]

$$\theta = \alpha\{\arg(Y) - \arg(X)\} \quad \cdots \text{(Equation 26)}$$

Here, a represents the degree of improvement in determinant, and 0<α≤1. The phase is determined such that the absolute value of the determinant is maximum when $\alpha$=1. The range and value of $\alpha$ are determined by, for example, a system requirement. $\alpha$ may be a specified fixed value or may be a variable value that varies according to a propagation environment.

When $\alpha$ is a fixed value, it can be considered that optimal performance is required in a system, for example. At this time, the value of $\alpha$ is fixed to 1 or a value close to 1 and a transmission weight is determined based on the value of $\alpha$ so that the channel capacity obtained from a propagation path is always maximum or takes a value close to the maximum.

When $\alpha$ is a variable value, required values for channel capacity and data rate, for example, are shown in design specifications or the like in advance. Spatial correlation that satisfies the required values is computed or calculated from statistical information or the like. A spatial correlation value is calculated based on a channel estimation value in a propagation path channel, and the value of $\alpha$ is controlled in a base station or terminal so as to satisfy the required values shown previously, thereby a transmission weight is determined.

An example of the case will be described below where a system requirement is provided. FIG.13A shows a relationship between spatial correlation and channel capacity, and FIG.13B shows a relationship between the absolute value of channel determinant equation 19 for the case of being multiplied by a transmission weight and spatial correlation. The horizontal axis represents the real part of a complex number, and the vertical axis represents the imaginary part of the complex number. In FIG. 13A, when the channel capacity is C [bits/s/Hz], the spatial correlation value is 0.46, and, in FIG.13B, when the spatial correlation value is 0.46, the absolute value of channel determinant equation 19 is D.

FIG.13A shows that, when the system requirement is equal to or higher than channel capacity C [bits/s/Hz], the channel spatial correlation should be set to 0.46 or less. On the other hand, FIG.13B shows that when the spatial correlation is 0.46 or less, the absolute value of channel determinant equation 19 should be set to D or less. Accordingly, when the system requirement is equal to or higher than channel capacity C [bits/s/Hz], a channel determinant should be determined to be equation 27.

[27]

$$\det(H_w) \geq D \quad \cdots \text{(Equation 27)}$$

FIG.14 is a graph showing, on a complex plane, a relationship among vectors X, Y and wX, combined vectors X+Y and wX+Y, and an absolute value of a determinant of a reception estimation channel matrix. The horizontal axis represents the real part of a complex number, and the vertical axis represents the imaginary part of the complex number. The magnitude of combined vector 1303 of vectors X1301 and Y1302 is equal to an absolute value (magnitude) of determinant equation 28 of a reception estimation channel matrix where a transmission weight is not multiplied. Solid line 1304 is a circle formed by connecting points where distance from origin point O on the complex plane is equal to the magnitude of combined vector 1303.

[28]

$$\det(H) \quad \cdots \text{(Equation 28)}$$

On the other hand, the magnitude of combined vector 1306 of vectors wX1305 and Y1302 is equal to an absolute value (magnitude) of determinant equation 19 of a reception estimation channel matrix when a transmission weight is multiplied. Solid line 1307 is a circle formed by connecting points where distance from origin point O on the complex plane is equal to the magnitude of combined vector 1306.

Solid line 1308 is a circle formed by connecting points where distance from origin point O on the complex plane is D when the absolute value (magnitude) of a channel determinant that satisfies channel capacity C [Bits/s/Hz] which is the system requirement is D. Here, vectors X1301 and Y1302 are elements of the channel estimation value expressed by equation 23.

Vector wX1305 is a vector obtained by multiplying vector X1301 by transmission weight w, the phase is rotated by angle $\theta$ from the direction of vector X1301 to the direction of vector Y1302, and the magnitude of vector wX1305 can also be changed. By adjusting transmission weight w, the direction and magnitude of vector 1306 can be changed. That is, it is possible to increase an absolute value of a determinant of a reception estimation channel matrix when a transmission weight is multiplied.

In FIG.14, the circle with solid line 1304 is inside the circle with solid line 1308, it can be seen that, when the transmission weight is not multiplied, the absolute value of the channel determinant does not satisfy D which is the system requirement. On the other hand, when the transmission weight is multiplied, the circle with solid line 1307 is outside the circle with solid line 1308, and thus an absolute value of determinant equation 19 of a channel matrix that exceeds the value of D which is the system requirement for the absolute value of the channel determinant is attained.

More specifically, for example, when the channel capacity that should be satisfied between transmission and reception due to, for example, design specifications is 3 [bits/s/Hz], an absolute value of a channel determinant that satisfies this channel capacity is calculated and derived from statistical information or the like. For example, the absolute value of 0.4 is obtained. At this time, when the absolute value of the channel determinant where the transmission weight is not multiplied is, for example, 0.2, by multiplying the transmission weight, phase rotation, for example, a rotation of n/6 [rad] is applied. As a result, the absolute value of the channel determinant after the multiplication of the transmission weight is 0.4 or higher, for example, 0.5, and thus by multiplying the transmission weight, the system requirement can be satisfied.

As described above, even when the system requirement is provided, phase θ of transmission weight w can be expressed using equation 26.

FIG.15 is a block diagram showing a configuration of a mobile station according to Embodiment 1 of the present invention. In FIG.15, mobile station 1400 has two antennas 222-1 and 222-2, two RF receiving sections 1401-1 and 1401-2, channel estimating section 1402, signal demultiplexing section 1403, two demodulating sections 1404-1 and 1404-2, P/S converting section 1405, S/P converting section 1406, two modulating sections 1407-1 and 1407-2, two RF transmitting sections 1408-1 and 1408-2, and pilot controlling section 1409.

RF receiving sections 1401-1 and 1401-2 each include a band-pass filter, an analog and digital converter, a low noise amplifier, and the like. RF receiving sections 1401-1 and 1401-2 carry out down-conversion on the signals inputted from antennas 222-1 and 222-2 and input the signals to signal demultiplexing section 1403. In addition, at this time, pilot signals and pilot control signals are extracted and inputted to channel estimating section 1402 and pilot controlling section 1409, respectively.

Channel estimating section 1402 calculates a channel estimation value based on the pilot signals inputted from RF receiving sections 1401-1 and 1401-2 and inputs the calculated channel estimation value to signal demultiplexing section 1403.

Signal demultiplexing section 1403 demultiplexes, by a predetermined scheme, the signals inputted from RF receiving sections 1401-1 and 1401-2, respectively, based on the channel estimation value inputted from channel estimating section 1402, and inputs the demultiplexed signals to demodulating sections 1404-1 and 1404-2.

Demodulating sections 1404-1 and 1404-2 demodulate the received signals demultiplexed by signal demultiplexing section 1403 and input the demodulated signals to P/S converting section 1405.

P/S converting section 1405 converts received data which corresponds to the number of space division multiplexing and is inputted from demodulating sections 1404-1 and 1404-2 into serial data and outputs the data as received data.

S/P converting section 1406 converts the inputted transmission data into parallel data corresponding to the number of space division multiplexing and inputs the parallel data to modulating sections 1407-1 and 1407-2.

Modulating sections 1407-1 and 1407-2 modulate the transmission data inputted from S/P converting section 1406 and input the modulated data to RF transmitting sections 1408-1 and 1408-2.

RF transmitting sections 1408-1 and 1408-2 each have a band-pass filter, a digital/analog converter, a low noise amplifier, and the like. RF transmitting sections 1408-1 and 1408-2 carry out up-conversion on the inputted signals and radio transmit the signals to a base station via antennas 222-1 and 222-2.

When the pilot control signals are received from the base station, pilot controlling section 1409 inputs the pilot signals to RF transmitting sections 1408-1 and 1408-2.

As described above, according to Embodiment 1, in a wireless communication system using a MIMO technique, base station 400 having a first wireless communication apparatus has a larger number of antennas than mobile station 1400 having a second wireless communication apparatus, and, when an unused antenna occurs or is present temporarily, space division multiplexing transmission and diversity transmission are simultaneously carried out using the unused antenna. Furthermore, the signal to be diversity-transmitted is multiplied by a transmission weight and then transmitted.

Further, an apparatus employs a configuration
where a determinant value and an absolute value of a spatial correlation value are determined and a transmission weight is determined based on the determinant value and the absolute value of the spatial correlation value so as to further increase the channel capacity. Therefore, even in an environment where spatial correlation is high, the spatial correlation between propagation path channels can be reduced, so that it is possible to realize high channel capacity and improve the reception characteristic.

Further, the number of antennas provided in base station 400 having the first wireless communication apparatus is not limited to that shown in Embodiment 1 of the present invention, and base station 400 having the first wireless communication apparatus should include three or more antennas, and mobile station 1400 having the second wireless communication apparatus should have two or more antennas. When the number of antennas provided in base station 400 is three or more, the number of space division multiplexing is two or more, and there are two or more signals to be diversity-transmitted, two or more transmission weights can be generated.

For example, when base station 400 having the first wireless communication apparatus has four antennas, mobile station 1400 having the second wireless communication apparatus has two antennas, and two different signals and two diversity transmission signals are transmitted from the four antennas, base station 400 can generate two transmission weights. Further, when mobile station 1400 has a larger number of antennas than base station 400, the present embodiment can also be applied to uplink where mobile station 1400 is a transmitting side and base station 400 is a receiving side.

Specifically, when mobile station 1400 has three antennas and base station 400 has two antennas for mobile station 1400, the combined use of space division multiplexing transmission and diversity transmission is possible. At this time, mobile station 1400 generates a transmission weight based on the channel matrix fed back from base station 400. This transmission weight is multiplied by a signal to be diversity-transmitted. As described above, when mobile station 1400 has a larger number of antennas than base station 400, the present embodiment can also be applied to uplink where communication is carried out from mobile station 1400 to base station 400.

(Embodiment 2)

The configuration and operation of a wireless communication apparatus of Embodiment 2 of the present invention will be described using FIGs.16 to 17. The configuration and operation of a mobile station are the same as those in Embodiment 1, and therefore the configuration and operation of only a base station will be described. To avoid overlaps, only points different from Embodiment 1 will be described. A main difference is that, in the present embodiment, the power of the signal transmitted from each antenna is controlled. Therefore, an optimal transmission weight generation method is different from that in Embodiment 1.

FIG.16 is a block diagram showing a configuration of base station 1500 according to Embodiment 2 of the present invention. Base station 1500 is different from first wireless communication apparatus 400 of Embodiment 1 in that transmission power and weight controlling section 1511 is used instead of power controlling section 405 and transmission weight generating section 411 and multipliers 1512-1 to 1512-3 are provided instead of multiplier 412.

Transmission power and weight controlling section 1511 carries out optimal power control on the signal transmitted from each antenna and generates a transmission weight, based on the selected signal information inputted from transmission diversity signal selecting section 410 and the channel information inputted from channel monitoring section 415, and outputs transmission power information to multipliers 1512-1 and 1512-2 and transmission weight information to multiplier 1512-3. Further, a mode of signal processing for transmission power control and transmission weight generation will be described later.

Multipliers 1512-1 and 1512-2 multiply the transmission signals inputted from modulating sections 402-1 and 402-2 by the transmission power information outputted from transmission power and weight controlling section 1511, respectively. Multiplier 1512-3 multiplies the transmission diversity signal outputted from transmission diversity signal selecting section 410 by the transmission weight information outputted from transmission power and weight controlling section 1511.

FIG.17 is a block diagram showing a detailed configuration of transmission power and weight controlling section 1511. Transmission power and weight controlling section 1511 is different from transmission weight generating section 411 of Embodiment 1 of the present invention in that transmission power calculating section 1641 is provided instead of weight amplitude calculating section 641.

Transmission power calculating section 1641 calculates an amplitude of a transmission weight and power (amplitude) of a signal where the transmission weight is not multiplied, based on the channel determinant information inputted from channel determinant calculating section 621 and outputs the calculated amplitude to weight generating section 651 as weight amplitude information and outputs the calculated power to multipliers 1512-1 and 1512-2 as transmission power information. Weight generating section 651 generates a transmission weight based on the transmission weight phase information inputted from weight phase calculating section 631 and the transmission weight amplitude information inputted from transmission power calculating section 1641 and outputs the transmission weight.

Here, a process of generating transmission power information which is generated at transmission power calculating section 1641 will be described. Generally, in a wireless communication system, maximum transmittable power is specified. Hence, when there are a plurality of antennas, power is distributed among the antennas and the transmission power of the signal transmitted from each antenna is controlled so as not to exceed the maximum transmittable power. The present embodiment adopts a configuration where transmission power calculating section 1641 calculates transmission power and distributes power among the antennas.

Now, when the maximum transmittable power, that is, the total transmission power is P and the transmission powers of signals transmitted from three antennas 201-1 to 201-3 are expressed by equations 29, 30 and 31, respectively, a relationship among equations 29, 30 and 31 and P can be expressed by equation 32. Power distribution coefficient equations 33 and 34 which are transmission power information are inputted to multipliers 1512-1 and 1512-2, respectively, and equation 35 is inputted to weight generating section 651.

[29]

$$p_1^{2} \quad \cdots \text{(Equation 29)}$$

[30]

$$p_2^{2} \quad \cdots \text{(Equation 30)}$$

[31]

$$p_3^{2} \quad \cdots \text{(Equation 31)}$$

[32]

$$p_1^{2} + p_2^{2} + p_3^{2} = P \quad \cdots \text{(Equation 32)}$$

[33]

$$p_1 \quad \cdots \text{(Equation 33)}$$

[34]

$$p_2 \quad \cdots \text{(Equation 34)}$$

[35]

$$p_3 \quad \cdots \text{(Equation 35)}$$

The transmission power distributed between antennas 201-1 and 201-3 is determined using equation 32 as a constraint condition so that an absolute value of channel determinant equation 28 is maximum based on the channel information inputted from channel monitoring section 415. For methods for maximizing a given variable under a constant constraint condition, there is Lagrange's method of undetermined multipliers. In the present embodiment, the transmission power distributed between base station antennas 201-1 and 201-3 is determined using the Lagrange's method of undetermined multipliers.

Further, although the Lagrange's method of undetermined multipliers is exemplified as a transmission power distribution method, transmission power distribution can be determined by using, for example, various mathematical techniques such as a water filling theorem and linear programming other than the Lagrange's method.

When an evaluation function in the Lagrange's method of undetermined multipliers is g, g can be expressed by equation 36.

[36]

$$g(p_1, p_2, p_3) \equiv |\det(H)| + \lambda(p_1^2 + p_2^2 + p_3^2 - P) \quad \cdots \text{(Equation 36)}$$

When the signal to be transmitted from base station antenna 201-3 is multiplied by a transmission weight, a pilot signal is also multiplied by the transmission weight. Furthermore, in the present embodiment, power distribution is carried out among the antennas. When the channel matrix estimated at a receiving side is equation 37, equation 37 is expressed by equation 38.

[37]

$$H_{w2} \quad \cdots \text{(Equation 37)}$$

[38]

$$H_{w2} = \begin{bmatrix} p_1 h_{11} + w h_{13} & p_2 h_{12} \\ p_1 h_{21} + w h_{23} & p_2 h_{22} \end{bmatrix} \quad \cdots \text{(Equation 38)}$$

A determinant of channel matrix equation 37 is from equation 38 as shown in equation 39.

[39]

$$\begin{aligned} \det(H_{w2}) &= p_2 h_{22}(p_1 h_{11} + w h_{13}) - p_2 h_{12}(p_1 h_{21} + w h_{23}) \\ &= p_2 \{w(h_{22}h_{13} - h_{12}h_{23}) + p_1(h_{22}h_{11} - h_{12}h_{21})\} \end{aligned} \quad \cdots \text{(Equation 39)}$$

When a phase of transmission weight w is θ, transmission weight w is expressed by equation 40.

[40]

$$w = p_3 e^{j\theta} \quad \cdots \text{(Equation 40)}$$

When equations 21 and 22 are equation 39, equation 39 can be expressed by equation 41.

[41]

$$\det(H_{w2}) = p_2(wX + p_1 Y) \quad \cdots \text{(Equation 41)}$$

FIG.18 shows a process where equation 41 is shown by vectors on a complex plane using the rotation and combination of several vector elements, to consider equation 41 from a geometrical point of view for easy understanding of equation 41. The horizontal axis represents the real part of a complex number, and the vertical axis represents the imaginary part of the complex number.

In FIG.18(a), vector 1701 is signal vector X before being multiplied by weight w, vector 1702 is vector p1Y obtained by multiplying signal vector Y before being multiplied by a power distribution coefficient by power distribution coefficient equation 33, and vector 1703 is vector wX obtained by multiplying vector 1701 by weight w and rotating the phase by θ in the direction of vector 1702. Now, vector wX and vector p1Y have the same phase.

In FIG.18(b), vector 1704 is combined vector wX+p1Y of vectors p1Y and wX. In FIG.18(c), vector 1705 is vector p2(wX+p1Y) obtained by multiplying combined vector wX+p1Y by power distribution coefficient equation 34.

In FIG.18, p1 and p2 are amplitude values and thus do not have phase components. Accordingly, as shown in FIGs.18(a) to (c), it can be considered from equation 41 that a determinant of equation 37 is equal to the magnitude of the vector obtained by multiplying, by a factor of equation 34, a combined vector of the vector obtained by multiplying vector Y by a factor of equation 33 and the vector obtained by multiplying vector X by weight w, that is, the vector obtained by providing phase rotation θ and amplitude fluctuation equation 35 to vector X. From this fact, it can be seen that if, by multiplying transmission weight w, absolute value equation 42 of a channel determinant can be made higher than an absolute value of a channel determinant before being multiplied by the transmission weight, channel capacity can be increased.

In Embodiment 2 of the present invention, it is intended to optimally distribute transmission power and it is considered to solve this using the Lagrange's method of undeterminedmultipliers, and thus, the case is assumed where absolute value equation 42 of a channel determinant is maximum. As shown in FIG.18(b), when two complex vectors p1Y and wX have the same phase, absolute value equation 42 of a channel determinant is maximum. At this time, equation 42 can be expressed by equation 43.

[42]

$$|\det(H_{w2})| \quad \cdots \text{(Equation 42)}$$

[43]

$$\det(H_{w2}) = p_2(p_3X + p_1Y) \quad \cdots \text{(Equation 43)}$$

By substituting equation 43 into equation 36, evaluation function g in the Lagrange's method of undetermined multipliers can be expressed by equation 44.

[44]

$$g(p_1, p_2, p_3) \equiv p_2(p_3|X| + p_1|Y|) + \lambda(p_1^2 + p_2^2 + p_3^2 - P) \quad \cdots \text{(Equation 44)}$$

When equation 44 is maximum under a condition that total transmission power is constant, the relationship of equation 45 is satisfied.

[45]

$$\frac{\partial g}{\partial p_1} = \frac{\partial g}{\partial p_2} = \frac{\partial g}{\partial p_3} = \frac{\partial g}{\partial \lambda} = 0 \quad \cdots \text{(Equation 45)}$$

From equation 45, simultaneous equations expressed by equation 46 are derived for four unknown equations 33, 34 and 35 and λ.

[46]

$$\begin{aligned} & p_2|Y| - 2p_1\lambda = 0 \\ & p_3|X| + p_1|Y| - 2p_2\lambda = 0 \\ & p_2|Y| - 2p_3\lambda = 0 \\ & p_1^2 + p_2^2 + p_3^2 = P \end{aligned} \quad \cdots \text{(Equation 46)}$$

By solving equation 46, transmission power information equations 33, 34 and 35 in transmission power calculating section 1641 are given by equation 47.

[47]

$$\begin{aligned} p_1 &= \sqrt{\frac{|Y|^2}{2(|X|^2 + |Y|^2)}P} = \sqrt{\frac{|h_{22}h_{11} - h_{12}h_{21}|^2}{2(|h_{22}h_{13} - h_{12}h_{23}|^2 + |h_{22}h_{11} - h_{12}h_{21}|^2)}P} \\ p_2 &= \sqrt{\frac{1}{2}P} \\ p_3 &= \sqrt{\frac{|X|^2}{2(|X|^2 + |Y|^2)}P} = \sqrt{\frac{|h_{22}h_{13} - h_{12}h_{23}|^2}{2(|h_{22}h_{13} - h_{12}h_{23}|^2 + |h_{22}h_{11} - h_{12}h_{21}|^2)}P} \end{aligned}$$

$\cdots$ (Equation 47)

Equations 33 and 34 are outputted as transmission power information, and multipliers 1512-1 and 1512-2 multiply transmission signals by the corresponding transmission power information. In addition, equation 35 is inputted to weight generating section 651 as weight amplitude information.

Phase θ of transmission weight w is set so that absolute value equation 42 of a channel determinant is higher than an absolute value of a channel determinant before being multiplied by a transmission weight, as with Embodiment 1 of the preset invention. Although, in the present embodiment, the case is assumed and described where vector equation 48 and wX have the same phase and absolute value equation 42 of a channel determinant is maximum, when the angle formed by vector equation 48 and wX is smaller than that before being multiplied by a transmission weight, channel capacity becomes higher than that before being multiplied by the transmission weight, as with Embodiment 1 of the present invention. From equation 11, phase θ of transmission weight w can be expressed by equation 49.

Further, after the second lines in equation 49, equation 33 only has amplitude information and is an unrelated value for determining a phase, and therefore the representation of equation 33 is omitted.

[48]

$$p_1 Y \quad \cdots \text{(Equation 48)}$$

[49]

$$\theta = \alpha\{\arg(p_1 Y) - \arg(X)\}$$
$$= \alpha\{\arg(Y) - \arg(X)\} = \alpha\{\arg(h_{22}h_{13} - h_{12}h_{23}) - \arg(h_{22}h_{11} - h_{12}h_{21})\}$$

... (Equation 49)

Here, α represents the degree of improvement in determinant, and 0<α≤1, as with Embodiment 1 . The phase is determined so that the determinant is maximum when α=1. The range and value of α are determined by, for example, a system requirement. α may be a specified fixed value or may be a variable value that varies according to a propagation environment. From equations 40, 47 and 49, transmission weight w is expressed by equation 50.

[50]

$$w = p_3 e^{j\theta} = \sqrt{\frac{|h_{22}h_{13} - h_{12}h_{23}|^2}{2\left(|h_{22}h_{13} - h_{12}h_{23}|^2 + |h_{22}h_{11} - h_{12}h_{21}|^2\right)}P} e^{j\alpha\{\arg(h_{22}h_{13} - h_{12}h_{23}) - \arg(h_{22}h_{11} - h_{12}h_{21})\}}$$

... (Equation 50)

As described above, according to Embodiment 2, in a wireless communication system using the MIMO technique, base station 1500 having a first wireless communication apparatus has a larger number of antennas than mobile station 1400 having a second wireless communication apparatus, and, when an unused antenna occurs or is present temporarily among the antennas, space division multiplexing transmission and diversity transmission are simultaneously carried out by newly using the unused antenna, and a signal to be diversity-transmitted is multiplied by a transmission weight and then transmitted.

In addition, in order to further increase channel capacity, a transmission weight is determined so that a spatial correlation value and an absolute value of a determinant are first determined, and then a transmission weight is determined based on the spatial correlation value and the absolute value of the determinant. Furthermore, even when a given path is in a too poor environment, power distribution is determined in advance for the signals emitted from antennas according to propagation conditions, and a little amount of power is distributed to a signal on a path under a poor environment so that there is almost no possibility of adversely affecting the transmission (communication) of signals passing through other paths.

That is, upon equal distribution transmission, although, when a given path is in a too poor environment, there is a possibility that an influence thereof may be exerted on the overall system, power distribution with a condition that reduces this possibility is carried out. Thus, in addition to advantages of Embodiment 1, even when a given path is in a too poor environment, an influence thereof on the overall system can be eliminated almost completely. As a result, an advantage of reducing the number of retransmission processing can also be easily expected, so that it is possible to further improve channel capacity and improve the reception characteristic.

Further, the number of antennas provided in a wireless communication apparatus according to Embodiment 2 is not limited to that shown in the present embodiment, and base station 1500 having the first wireless communication apparatus should include three or more antennas, and mobile station 1400 having the second wireless communication apparatus should have two or more antennas. When the number of antennas is three or more, the number of space division multiplexing is two or more, and there are two or more signals to be diversity-transmitted, two or more transmission weights can be generated.

For example, when base station 1500 has four antennas, mobile station 1400 has two antennas, and two different signals and two diversity transmission signals are transmitted from the four antennas, base station 1500 can generate two transmission weights. Further, when mobile station 1400 has a larger number of antennas than base station 1500, the present embodiment can also be applied to uplink where mobile station 1400 is a transmitting side and base station 1500 is a receiving side.

Specifically, when mobile station 1400 has three antennas and base station 1500 has two antennas for mobile station 1400, the combined use of space division multiplexing transmission and diversity transmission is possible. At this time, mobile station 1400 generates a transmission weight based on the channel matrix fed back from base station 1500. The signal to be diversity-transmittedismultiplied by this transmission weight. As described above, when mobile station 1400 has a larger number of antennas than base station 1500, the present embodiment can also be applied to uplink where communication is carried out from mobile station 1400 to base station 1500.

(Embodiment 3)

In the present embodiment, multicarrier modulation is assumed, and transmission weight control and transmission power control are carried out per subcarrier To avoid overlaps, the present embodiment will be described below only for points different from Embodiment 2.

FIG.19 is a block diagram showing a configuration of base station 1800 according to Embodiment 3 of the present invention. Base station 1800 is different from first wireless communication apparatus 1500 of Embodiment 2 in that diversity subcarrier selecting section 1810 is used instead of transmission diversity signal selecting section 410, and IFFT sections 1803-1 and 1803-2 and FFT sections 1815-1 and 1815-2 are further provided.

IFFT sections 1803-1 1 and 1803-2 carry out OFDM modulation (Orthogonal Frequency Division Multiplexing) by carrying out Inverse Fast Fourier Transform (hereinafter, "IFFT") processing on the input signals from modulating sections 402-1 and 402-2. Further, FFT sections 1815-1 and 1815-2 carry out OFDM demodulation by carrying out Fast Fourier Transform (hereinafter, "FTT") processing on the input signals from signal demultiplexing section 414.

Diversity subcarrier selecting section 1810 selects a signal to be diversity-transmitted per subcarrier from the signals outputted from two transmission systems, that is, IFFT sections 1803-1 and 1803-2 and outputs the selected signal. Pilot reception SNR measuring section 409 measures a reception SNR of the pilot signal for each subcarrier to be inputted to each antenna and inputs the reception SNR information for each subcarrier to diversity subcarrier selecting section 1810.

Using FIGs.20 and 21, a process of selecting a diversity transmission signal per subcarrier in diversity subcarrier selecting section 1810 will be described in detail below.

FIGs.20A to 20C illustrate a technique for selecting a transmission diversitysignalpersubcarrier. Although multiple subcarriers are generally used for OFDM modulation, here, for ease of description, the signals received by antennas 201-1 1 and 201-2 are comprised of three subcarriers. FIG.20A shows pilot reception SNR characteristics at antenna 201-1, and FIG.20B shows pilot reception SNR characteristics at antenna 201-2. The horizontal axis represents the frequency, and the vertical axis represents the pilot .

In FIG.20A, points A1 to A3 on the frequency axis represent subcarrier frequencies f1 to f3, respectively, and parabolas 1910-1 to 1910-3 having peak levels LA1 to LA3 at points A1 to A3 represent SNR1(f1), SNR1(f2) and SNR1 (f3) which are the SNRs of subcarrier components. SNR1(f) which is a pilot reception SNR at antenna 201-1 is comprised of SNR1(f1) 1910-1 to SNR1(f3) 1910-3.

Further, in FIG.20B, points B1, B2 and B3 on the frequency axis represent subcarrier frequencies f1 to f3, respectively, and parabolas 1920-1 to 1920-3 having peak levels LB1 to LB3 at points B1 to B3 represent SNR2 (f1), SNR2(f2) and SNR2(f3) which are the SNRs of subcarrier components. SNR2(f) which is a pilot reception SNR at antenna 201-2 is comprised of SNR2(f1) 1920-1 to SNR2 (f3) 1920-3.

In FIGs.20A and 20B, there are relationships of LA1>LB1, LA2>LB2 and LA3<LB3.

FIG. 20C is a graph showing assignment of diversity subcarrier signals outputted from antenna 201-3 as a result of selecting a transmission diversity signal per subcarrier. Although the horizontal axis represents the frequency and the vertical axis represents the signal level for ease of explanation, here, the object is to show a signal assignment relationship, and thus a magnitude relationship between signal level values is not considered. Points C1, C2 and C3 on the frequency axis represent subcarrier frequencies f1, f2 and f3, respectively, and the signals transmitted at the subcarrier frequencies f1 to f3 are first transmission signal 1930-1, second transmission signal 1930-2 and third transmission signal 1930-3, respectively.

It is assumed that transmission signal X1 is transmitted from antenna 201-1, and transmission signal X2 is transmitted from antenna 201-2.

In FIGs.20A and 20B, SNR1(f1)>SNR2(f1), and SNR1(f2)>SNR2(f2). That is, for subcarriers f1 and f2, the value of reception SNR2 (f) at antenna 201-2 is worse than that of reception SNR1(f) at antenna 201-1. Diversity subcarrier selecting section 1810 diversity-transmits a signal with the worse pilot reception SNR, and therefore, in subcarrier frequencies f1 and f2, transmission signal X2 is selected as a diversity transmission signal.

On the other hand, for subcarrier frequency f3, SNR1(f3)<SNR2(f3), and thus transmission signal X1 is selected as a diversity transmission signal. That is, in FIG.20C, transmission signal X2 is assigned to first and second transmission signals 1930-1 and 1930-2, and transmission signal X1 is assigned to third transmission signal 1930-3.

FIG . 21 is a flowchart showing a signal selection in diversity subcarrier selecting section 1810. The signal outputted from IFFT section 1803-1 is X1(f), and the signal outputted from IFFT section 1803-2 is X2(f). First, at step S2010, reception SNR information for each subcarrier inputted from pilot reception SNR measuring section 409 is received.

Then, to repeatedly carry out routine processing per subcarrier, value n that specifies a target subcarrier is set to 1 (step S2015). Here, n is a variable that specifies a target subcarrier, and, when n=1, the target subcarrier is f1. The total number of subcarriers is N.

Subsequently, at step S2020, pilot reception SNRs of subcarriers at antennas 201-1 and 201-2 are compared to determine per subcarrier which path is worse. It is expected that the bit error rate degrades in a poor path, and therefore it is intended to improve the degradation through diversity transmission.

If, at step S2020, reception SNR1 (fn) is equal to or higher than reception SNR2(fn), it is determined that a path leading to antenna 201-2 is poor, and thus step S2030-1 is carried out. On the other hand, if, at step S2020, reception SNR2 (fn) is higher than reception SNR1(fn), it is determined that a path leading to antenna 201-1 is poor, and thus step S2030-2 is carried out. At step S2030-1, X2(fn) is selected as a transmission diversity signal, and, at step S2030-2, X1 (fn) is selected as a transmission diversity signal.

Since the above-described processing is carried out on all subcarriers, it is determined whether current variable n is equal to total number of subcarriers N (step S2035). If n<N, then n=n+1 (step S2040), and the operations at step S2020 and subsequent steps are repeatedly carried out on subsequent target subcarriers until n=N.

Further, in blocks other than diversity subcarrier selecting section 1810, the same processing as those in Embodiment 2 are carried out per subcarrier.

FIG.22 is a bock diagram showing a configuration of mobile station 2100 according to Embodiment 3 of the present invention.

Mobile station 2100 is different from that of Embodiment 1 in that, in addition to mobile station 1400, there are provided FFT sections 2110-1 and 2110-2 and IFFT sections 2111-1 and 2111-2.

FFT sections 2110-1 and 2110-2 carry out OFDM demodulation by carrying out FFT processing on the input signals from antennas 222-1 and 222-2. Further, IFFT sections 2111-1 and 2111-2 carry out OFDM modulation by carrying out IFFT processing on the input signals.

As described above, according to Embodiment 3, in a wireless communication system using the MIMO technique, base station 1800 having a first wireless communication apparatus has a larger number of antennas than mobile station 2100 having a second wireless communication apparatus, and, when an unused antenna occurs or is present temporarily among the antennas, space division multiplexing transmission and diversity transmission are simultaneously carried out by newly using the unused antenna, and a signal to be diversity-transmitted is multiplied by a transmission weight and then transmitted.

In addition, in order to further increase channel capacity, a transmission weight is determined such that a spatial correlation value and an absolute value of a determinant are first determined, and a transmission weight is determined based on the spatial correlation value and the absolute value of the determinant. By this means, the spatial correlation between propagation path channels decreases, and the channel capacity increases, so that the reception characteristic can be improved. Furthermore, in multicarrier transmission such as OFDM, by selecting a signal to be diversity-transmitted per subcarrier, the influence of frequency selective fading can be reduced.

Further, the number of antennas provided in base station 1800 having a first wireless communication apparatus according to Embodiment 3 of the present invention is not limited to that shown in the present embodiment, and base station 1800 should have three or more antennas, and mobile station 2100 having a second wireless communication apparatus should have two or more antennas. Further, when the number of antennas is three or more, the number of space division multiplexing is two or more, and there are two or more signals to be diversity-transmitted, two or more transmission weights can be generated.

For example, when base station 1800 has four antennas, mobile station 2100 has two antennas, and two different signals and two diversity transmission signals are transmitted from the four antennas, this base station can generate two transmission weights. Further, when mobile station 2100 has a larger number of antennas than base station 1800, the present embodiment can also be applied to uplink where mobile station 2100 is a transmitting side and base station 1800 is a receiving side.

Specifically, when a mobile station has three antennas and base station 1800 has two antennas for mobile station 2100, the combined use of space division multiplexing transmission and diversity transmission is possible. At this time, mobile station 2100 generates a transmission weight based on the channel matrix fed back from base station 1800. The signal to be diversity-transmitted is multiplied by this transmission weight. As described above, when mobile station 2100 has a larger number of antennas than base station 1800, the present embodiment can also be applied to uplink where communication is carried out from mobile station 2100 to base station 1800.

In the above embodiments, although the case has been described as an example where the present invention is implemented with hardware, the present invention can be implemented with software.

Furthermore, each function block employed in the description of each of the aforementioned embodiments may typically be implemented as an LSI constituted by an integrated circuit. These may be individual chips or partially or totally contained on a single chip. "LSI" is adopted here but this may also be referred to as "IC", "system LSI", "super LSI", or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells in an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The present application is based on Japanese Patent Application No.2005-097399, filed on March 30, 2005, the entire content of which is expressly incorporated by reference herein.

Industrial Applicability

As described above, the wireless communication method, the wireless communication system and the wireless communication apparatus according to the present invention have an advantage of making it possible to improve the reception characteristic even in an environment where spatial correlation is high, by reducing spatial correlation and increasing channel capacity, and are useful for, for example, a wireless communication system using a MIMO technique.

## Claims

1. A wireless communication method carried out by a first wireless communication apparatus having a plurality of first antennas and a second wireless communication apparatus having a plurality of second antennas, the method comprising:

    a detection step of detecting presence or occurrence of an unused antenna in the first wireless communication apparatus, the unused antenna being not performing communication with the second wireless communication apparatus;
    a received quality measurement step of measuring received quality of a pilot signal transmitted from the second wireless communication apparatus;
    a transmission diversity selection step of selecting any of different signals to be simultaneously transmitted from the plurality of first antennas based on the received quality, as a signal to which transmission diversity is applied using the unused antenna; and
    a transmission step of transmitting transmission signals to the second wireless communication apparatus from the antennas of the first wireless communication apparatus.

2. Thewirelesscommunication methodaccordingtoclaim 1, further comprising:

    a channel estimation step of calculating a channel estimation value for MIMO channels formed between the plurality of first antennas and the plurality of second antennas, based on the pilot signal transmitted from the second wireless communication apparatus; and
    a transmission weight generation step of generating a transmission weight which is based on a transmission weight calculation criterion using the channel estimation value and the transmission diversity selection result.

3. The wireless communication method according to claim 1, wherein the received quality in the received quality measurement step is a received signal to noise ratio of the channel estimation value.

4. The wireless communication method according to claim 2, wherein the transmission weight calculation criterion in the transmission weight generation step is an absolute value of a determinant of the MIMO channels.

5. Thewirelesscommunication method according to claim 1, wherein the transmission step comprises a power control step of adaptively determining power of the transmission signals to be transmitted from the plurality of first antennas.

6. The wireless communication method according to claim 1, wherein, in the transmission diversity selection step, when the transmission signals are multicarrier signals, received quality is compared per subcarrier, and a transmission diversity signal is selected.

7. A wireless communication system comprising:

a first wireless communication apparatus having a plurality of first antennas; and
a second wireless communication apparatus having a plurality of second antennas, wherein:
the first wireless communication apparatus comprises:

a detecting section that detects presence or occurrence of an unused antenna being not performing communication with the second wireless communication apparatus;
a received quality measuring section that measures received quality of a pilot signal transmitted from the second wireless communication apparatus;
a transmission diversity selecting section that selects any of different signals to be simultaneously transmitted from the plurality of first antennas based on the received quality, as a signal to which transmission diversity is applied using the unused antenna; and
a transmitting section that transmits transmission signals to the second wireless communication apparatus from the antennas of the first wireless communication apparatus; and the second wireless communication apparatus comprises:
a receiving section that receives the transmission signals transmitted from the first wireless communication apparatus;
a channel estimating section that calculates a channel estimation value for MIMO channels formed between the plurality of first antennas and the plurality of second antennas based on a pilot signal among the received signals; and
a signal demultiplexing section that demultiplexes the received signals based on the channel estimation value.

**8.** A wireless communication apparatus comprising:

a plurality of first antennas that receive radio signals of a first MIMO channel and transmit radio signals through a second MIMO channel;
a detecting section that detects presence or occurrence of an unused antenna being not performing communication out of the plurality of first antennas;
a received quality measuring section that measures received quality of a pilot signal transmitted from a communicating party;
a transmission diversity selecting section that selects any of different signals to be simultaneously transmitted from the plurality of first antennas based on the received quality, as a signal to which transmission diversity is applied using the unused antenna; and
a transmitting section that transmits transmission signals from the plurality of first antennas.

**9.** The wireless communication apparatus according to claim 8, further comprising:

a channel estimating section that calculates a channel estimation value of the first MIMO channel based on the pilot signal transmitted from the communicating party;
a transmission weight generating section that generates a transmission weight such that an absolute value of a determinant of the first MIMO channel becomes higher using the channel estimation value and the transmission diversity selection result; and
a multiplying section that multiplies a signal to be transmitted from the unused antenna by the transmission weight.

**10.** The wireless communication apparatus according to claim 9, wherein the transmission weight generating section comprises a power controlling section that generates the transmission weight based on the channel estimation value and the transmission diversity selection result and adaptively controls power of transmission signals to be transmitted from antennas under a condition that total transmission power is constant.

**11.** A wireless communication apparatus comprising:

a receiving section that receives radio signals of a second MIMO channel;
a channel estimating section that calculates a second channel estimation value for the second MIMO channel based on a pilot signal among the received signals; and
a signal demultiplexing section that demultiplexes the received signals based on the second channel estimation value.

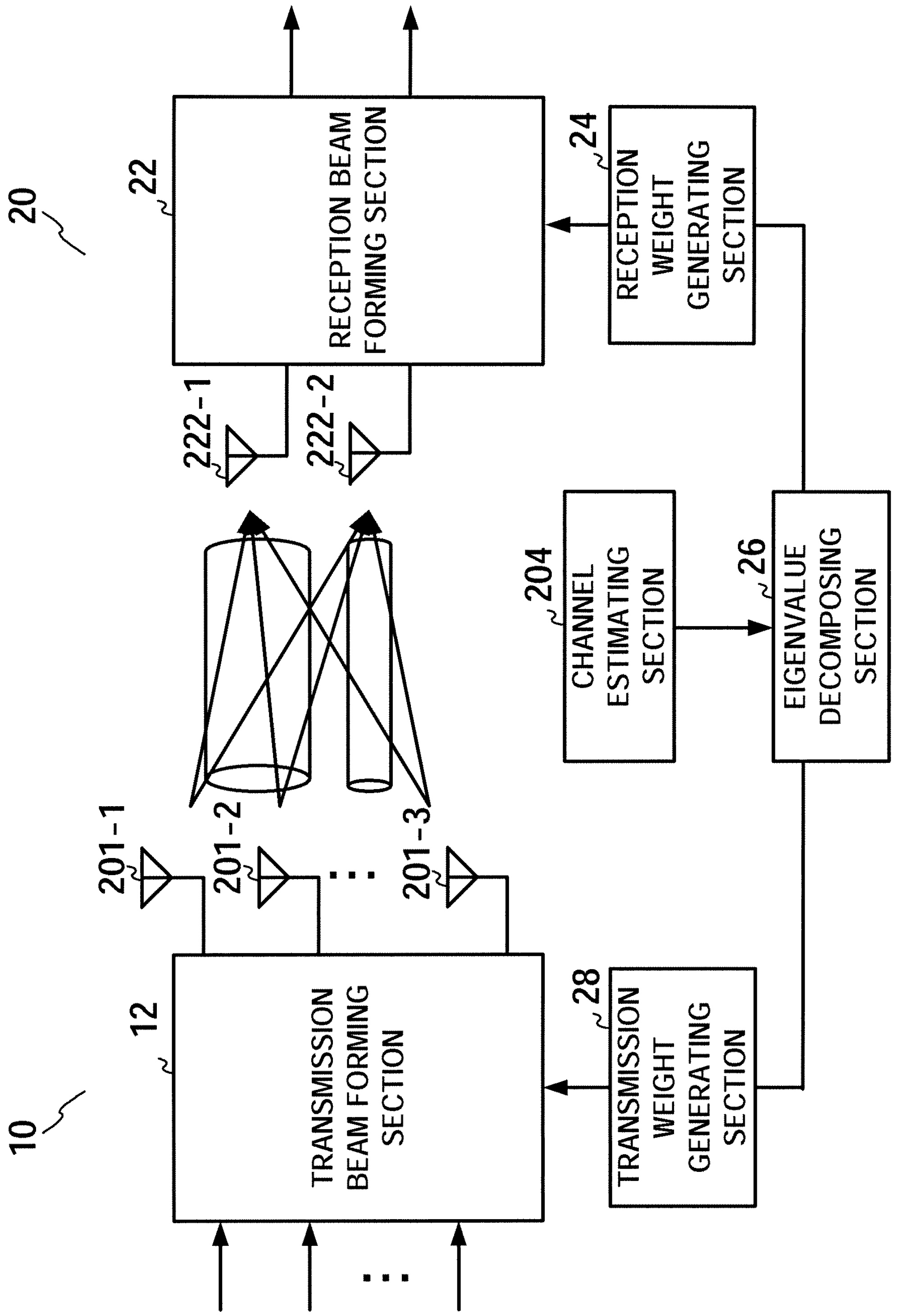
20
22
RECEPTION BEAM FORMING SECTION
24
RECEPTION WEIGHT GENERATING SECTION
222-1
222-2
204
CHANNEL ESTIMATING SECTION
26
EIGENVALUE DECOMPOSING SECTION
201-1
201-2
201-3
10
12
TRANSMISSION BEAM FORMING SECTION
28
TRANSMISSION WEIGHT GENERATING SECTION

FIG.1

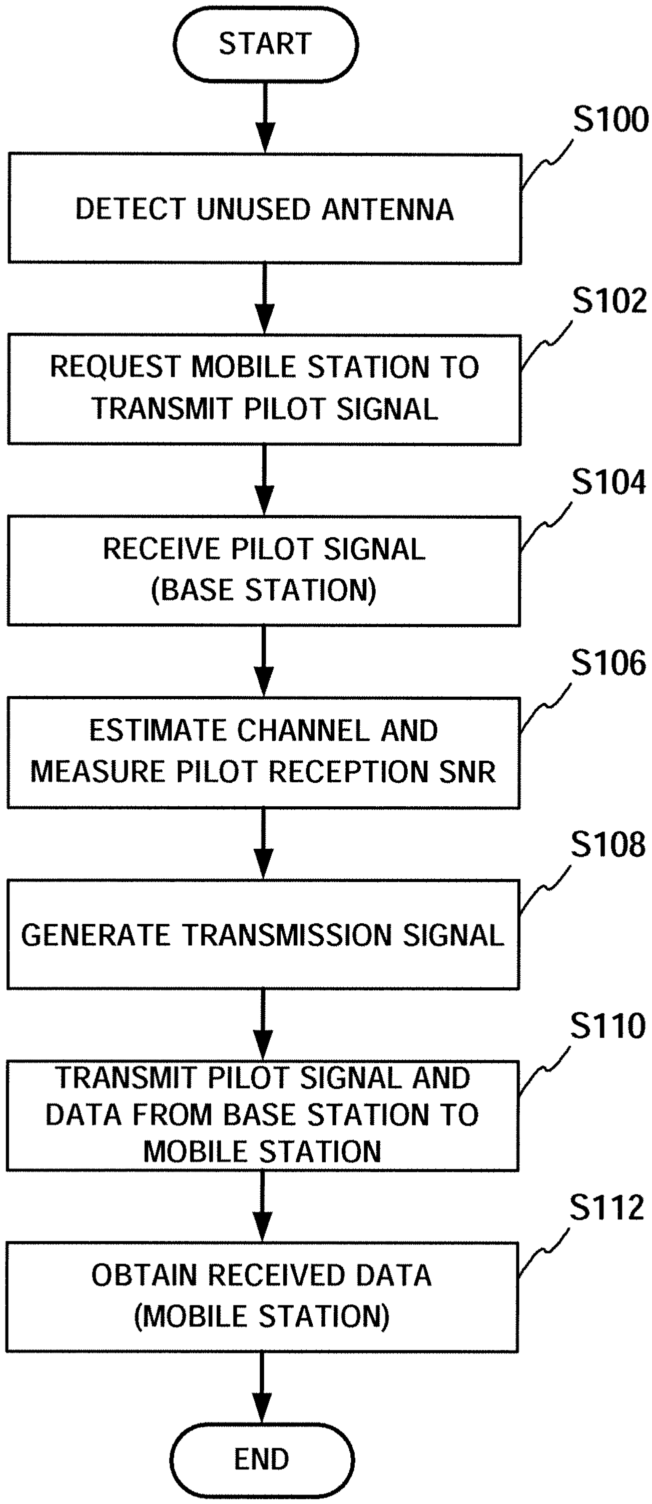
START
S100
DETECT UNUSED ANTENNA
S102
REQUEST MOBILE STATION TO TRANSMIT PILOT SIGNAL
S104
RECEIVE PILOT SIGNAL (BASE STATION)
S106
ESTIMATE CHANNEL AND MEASURE PILOT RECEPTION SNR
S108
GENERATE TRANSMISSION SIGNAL
S110
TRANSMIT PILOT SIGNAL AND DATA FROM BASE STATION TO MOBILE STATION
S112
OBTAIN RECEIVED DATA (MOBILE STATION)
END

FIG.2

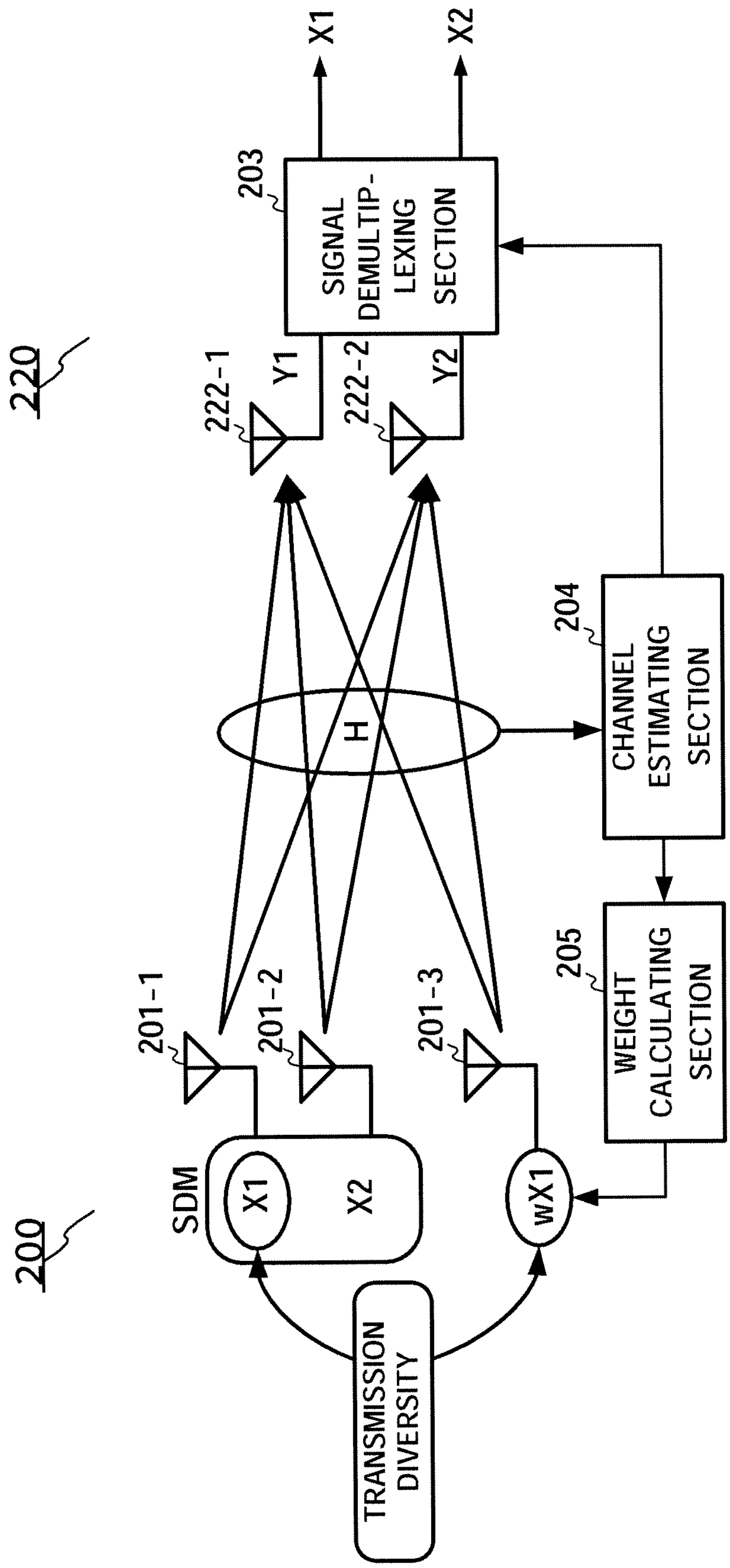
200
220
TRANSMISSION DIVERSITY
SDM
X1
X2
wX1
201-1
201-2
201-3
H
222-1
222-2
Y1
Y2
203
SIGNAL DEMULTIPLEXING SECTION
X1
X2
204
CHANNEL ESTIMATING SECTION
205
WEIGHT CALCULATING SECTION

FIG.3

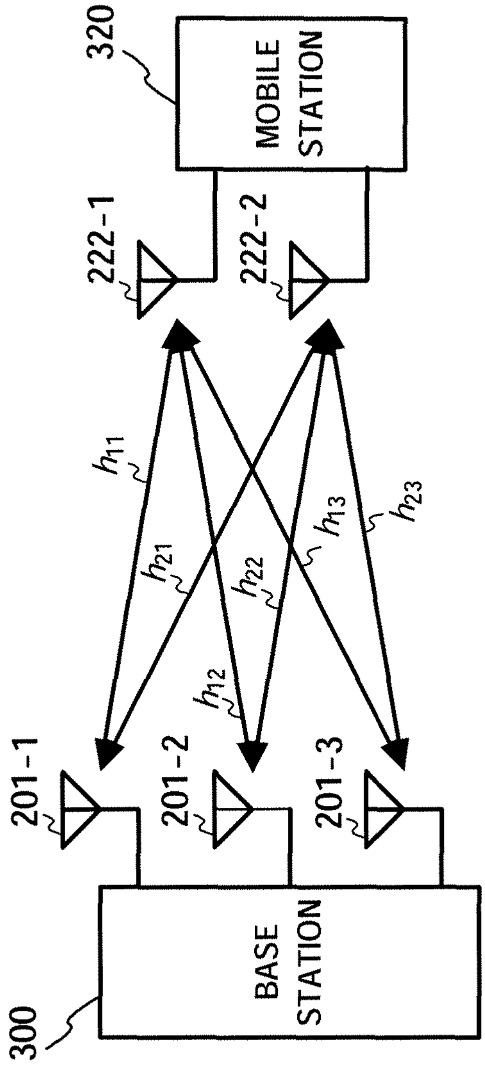
320
MOBILE STATION
222-1
222-2
$h_{11}$
$h_{21}$
$h_{22}$
$h_{13}$
$h_{23}$
$h_{12}$
201-1
201-2
201-3
300
BASE STATION

FIG.4

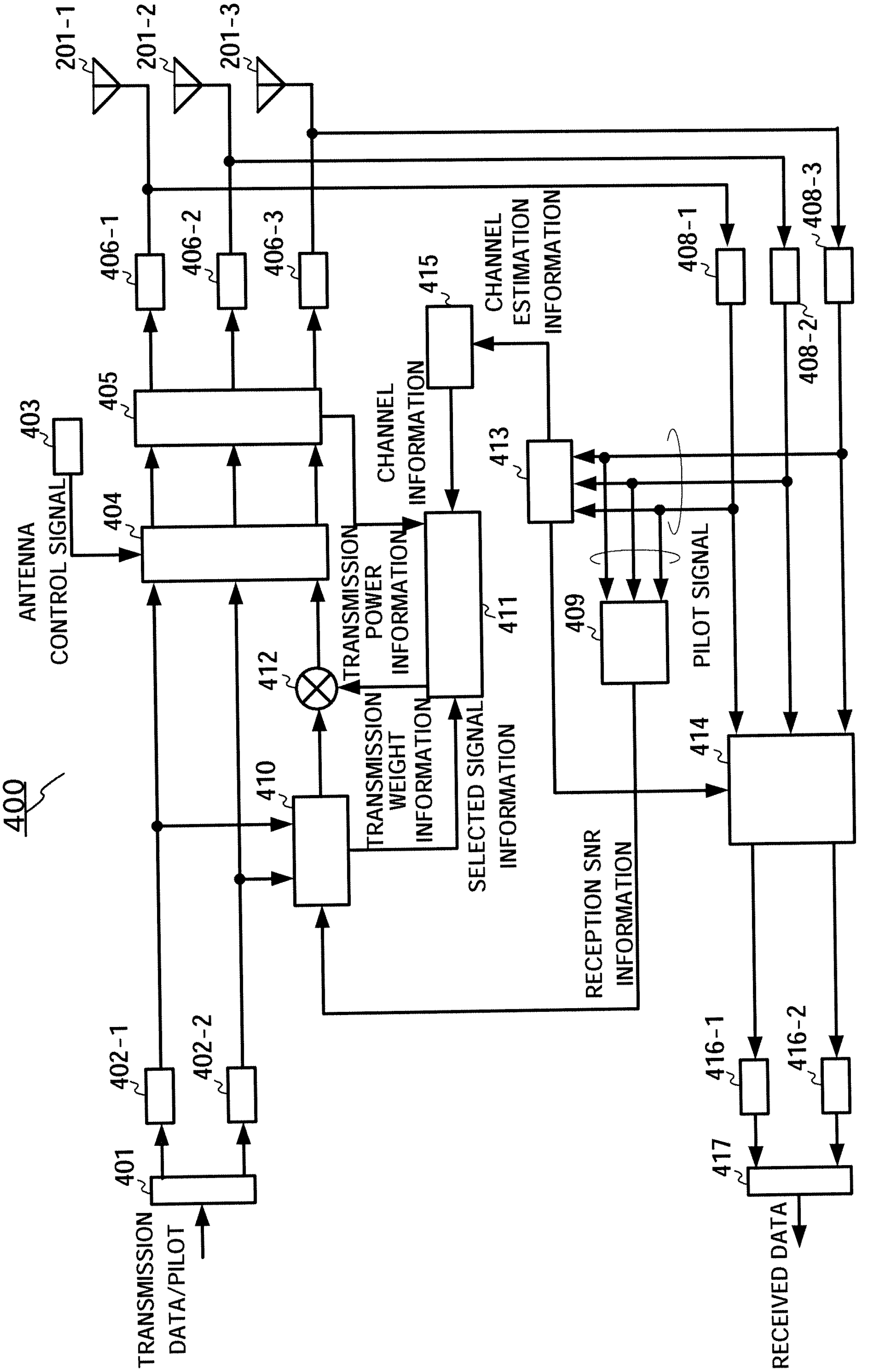
400
201-1
201-2
201-3
406-1
406-2
406-3
408-1
408-2
408-3
403
ANTENNA CONTROL SIGNAL
404
405
415
CHANNEL ESTIMATION INFORMATION
CHANNEL INFORMATION
413
TRANSMISSION POWER INFORMATION
411
409
PILOT SIGNAL
412
TRANSMISSION WEIGHT INFORMATION
SELECTED SIGNAL INFORMATION
410
414
RECEPTION SNR INFORMATION
402-1
402-2
401
TRANSMISSION DATA/PILOT
416-1
416-2
417
RECEIVED DATA

FIG.5

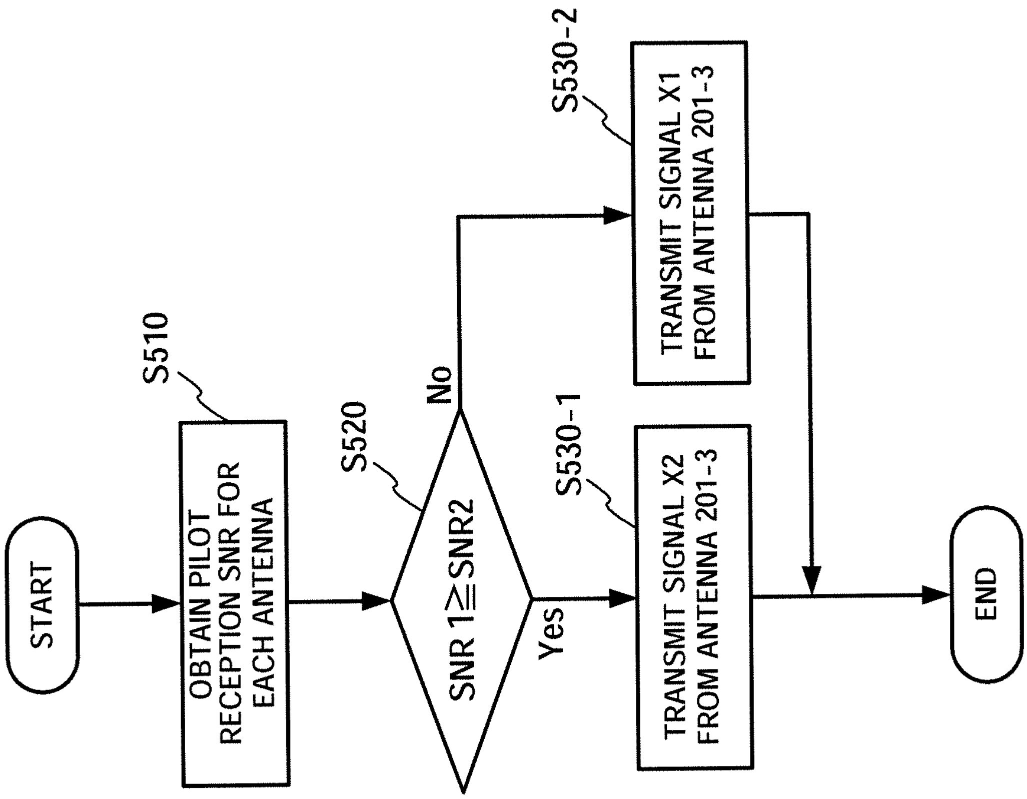
START
S510
OBTAIN PILOT RECEPTION SNR FOR EACH ANTENNA
S520
SNR 1≧SNR2
Yes
No
S530-1
TRANSMIT SIGNAL X2 FROM ANTENNA 201-3
S530-2
TRANSMIT SIGNAL X1 FROM ANTENNA 201-3
END

FIG.6

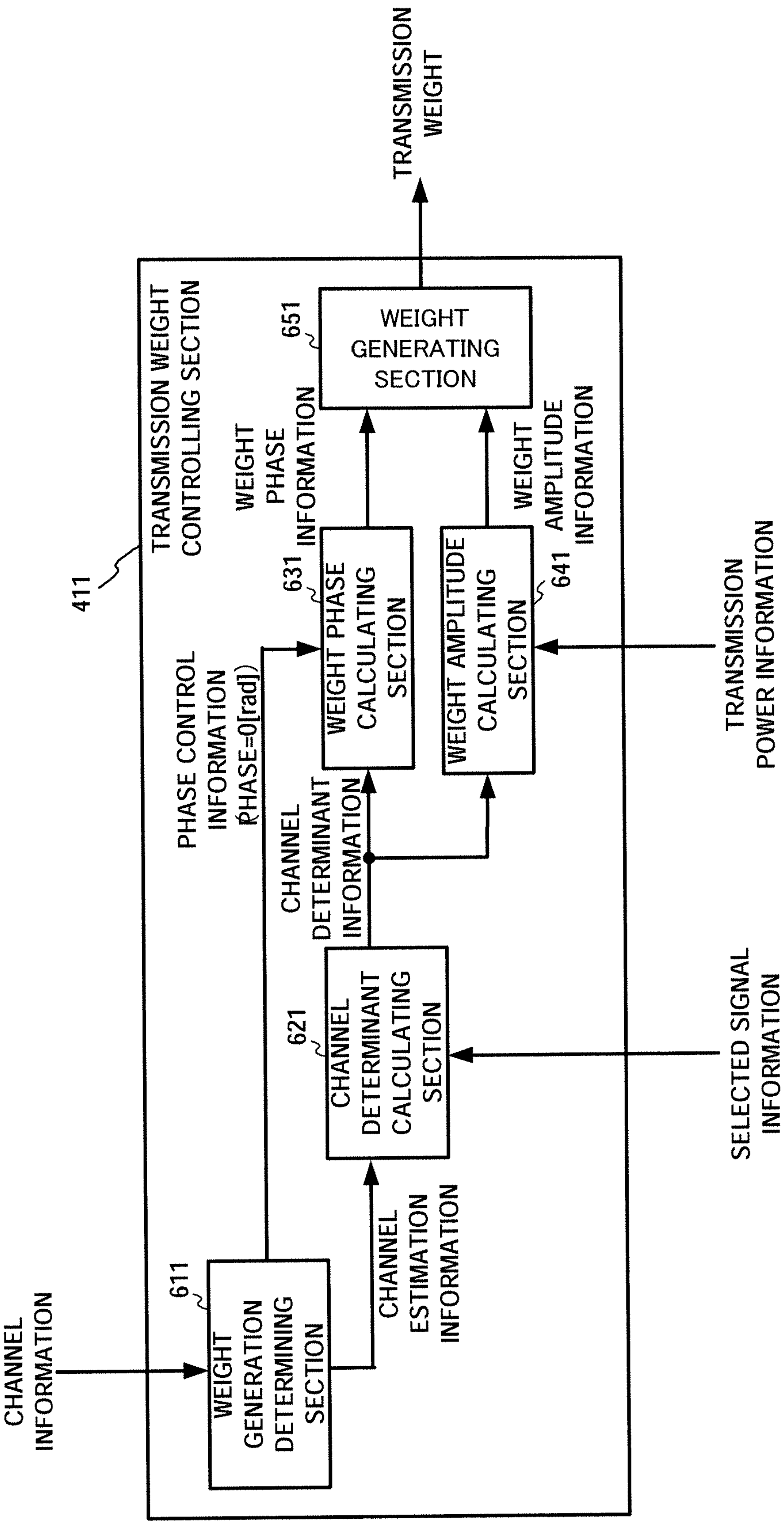
TRANSMISSION WEIGHT
411
TRANSMISSION WEIGHT CONTROLLING SECTION
651
WEIGHT GENERATING SECTION
WEIGHT PHASE INFORMATION
WEIGHT AMPLITUDE INFORMATION
631
WEIGHT PHASE CALCULATING SECTION
641
WEIGHT AMPLITUDE CALCULATING SECTION
PHASE CONTROL INFORMATION (PHASE=0[rad])
CHANNEL DETERMINANT INFORMATION
TRANSMISSION POWER INFORMATION
621
CHANNEL DETERMINANT CALCULATING SECTION
SELECTED SIGNAL INFORMATION
611
WEIGHT GENERATION DETERMINING SECTION
CHANNEL INFORMATION
CHANNEL ESTIMATION INFORMATION

FIG.7

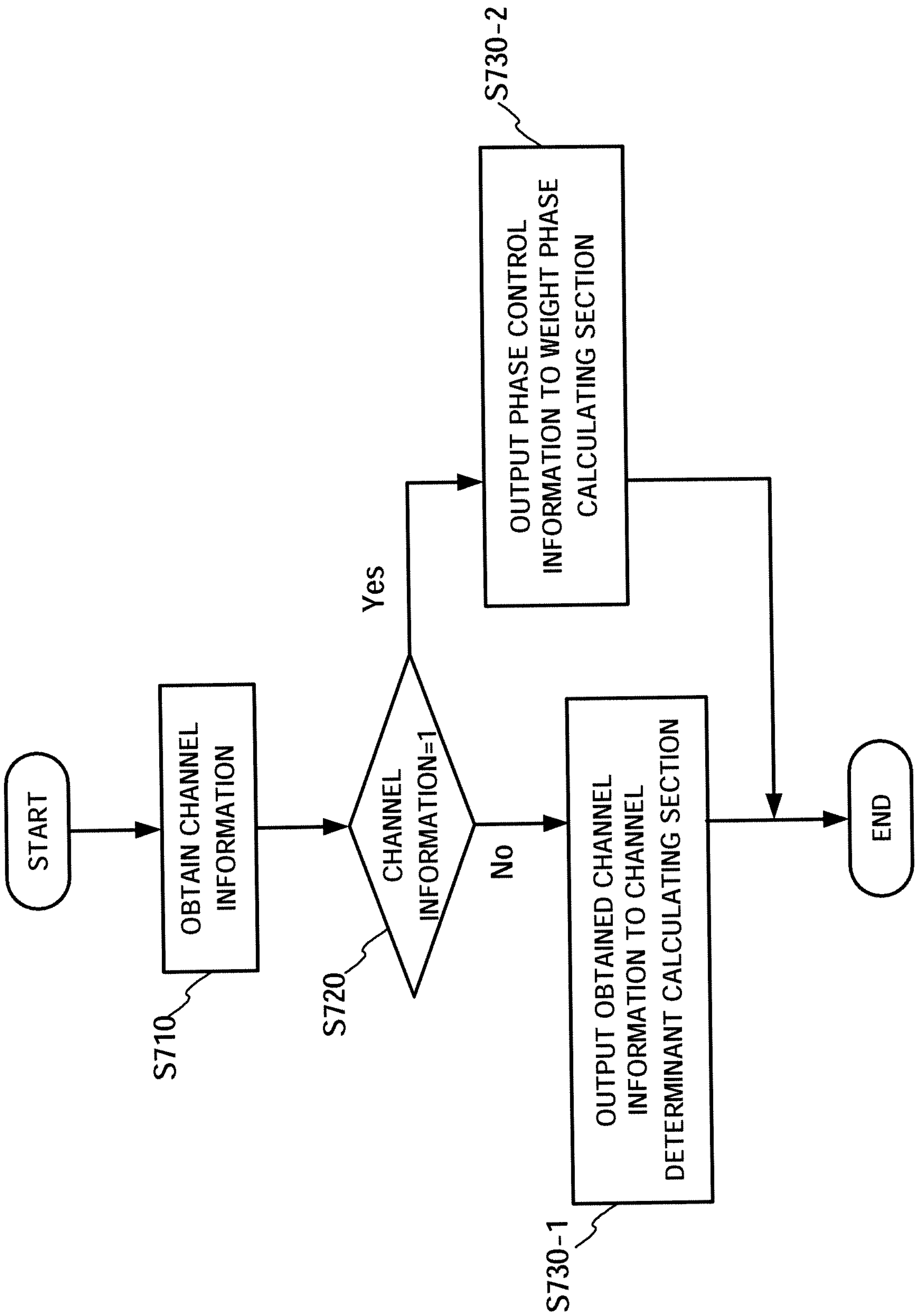
START
OBTAIN CHANNEL INFORMATION
S710
CHANNEL INFORMATION=1
S720
Yes
No
OUTPUT PHASE CONTROL INFORMATION TO WEIGHT PHASE CALCULATING SECTION
S730-2
OUTPUT OBTAINED CHANNEL INFORMATION TO CHANNEL DETERMINANT CALCULATING SECTION
S730-1
END

FIG.8

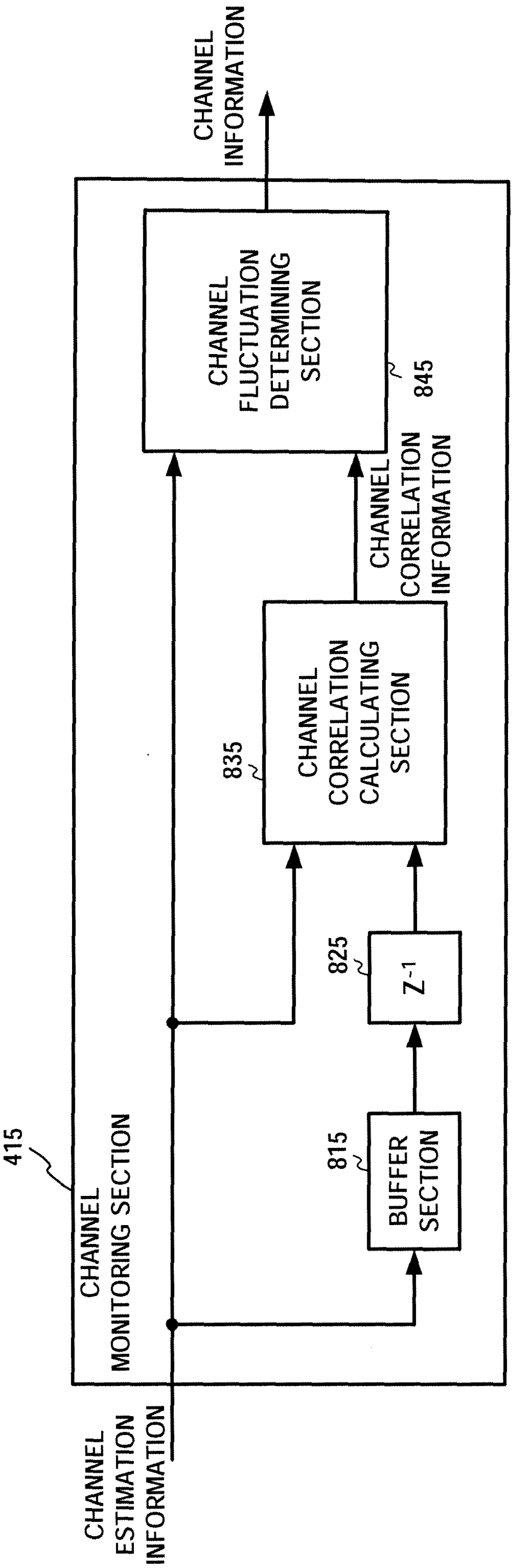
CHANNEL INFORMATION
CHANNEL FLUCTUATION DETERMINING SECTION
845
CHANNEL CORRELATION INFORMATION
835
CHANNEL CORRELATION CALCULATING SECTION
825
Z-1
815
BUFFER SECTION
415
CHANNEL MONITORING SECTION
CHANNEL ESTIMATION INFORMATION

FIG.9

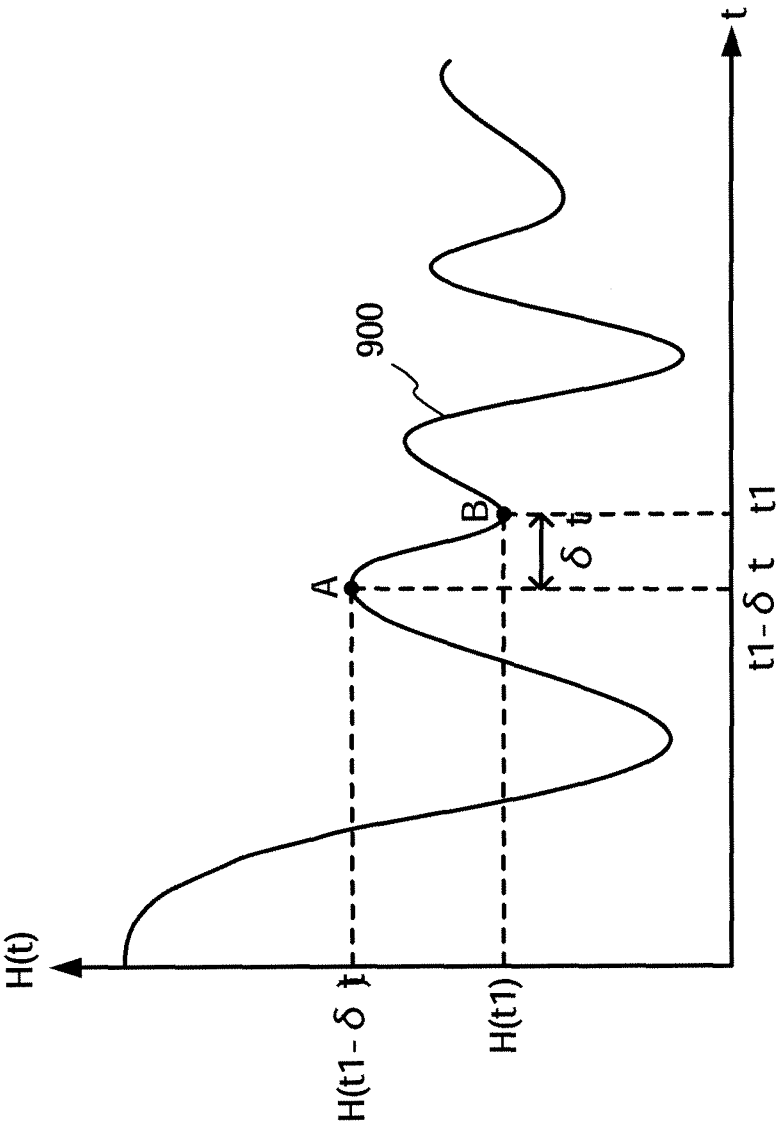


FIG.10

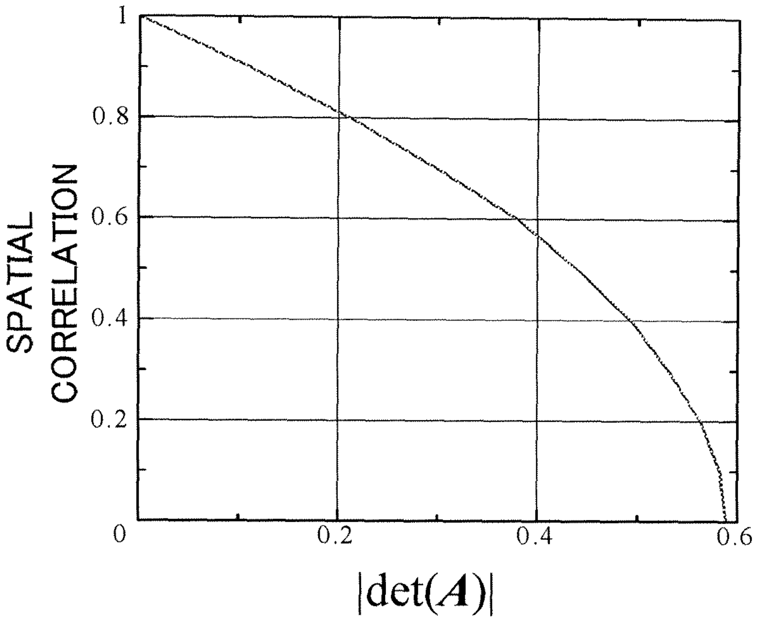


FIG.11A

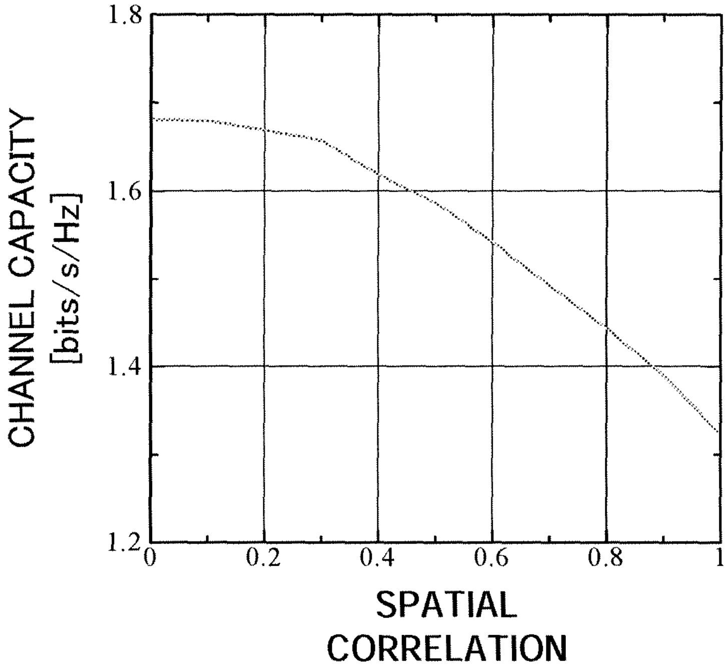


FIG.11B

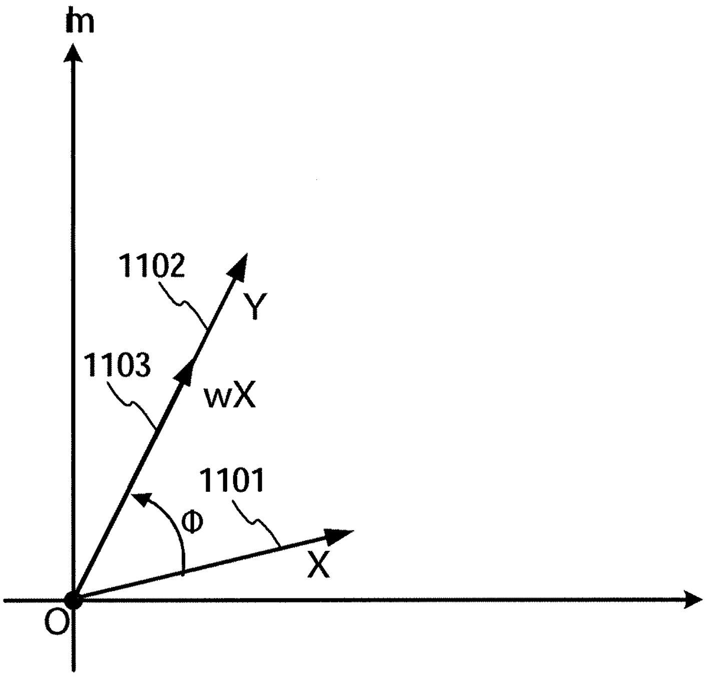


FIG.12A

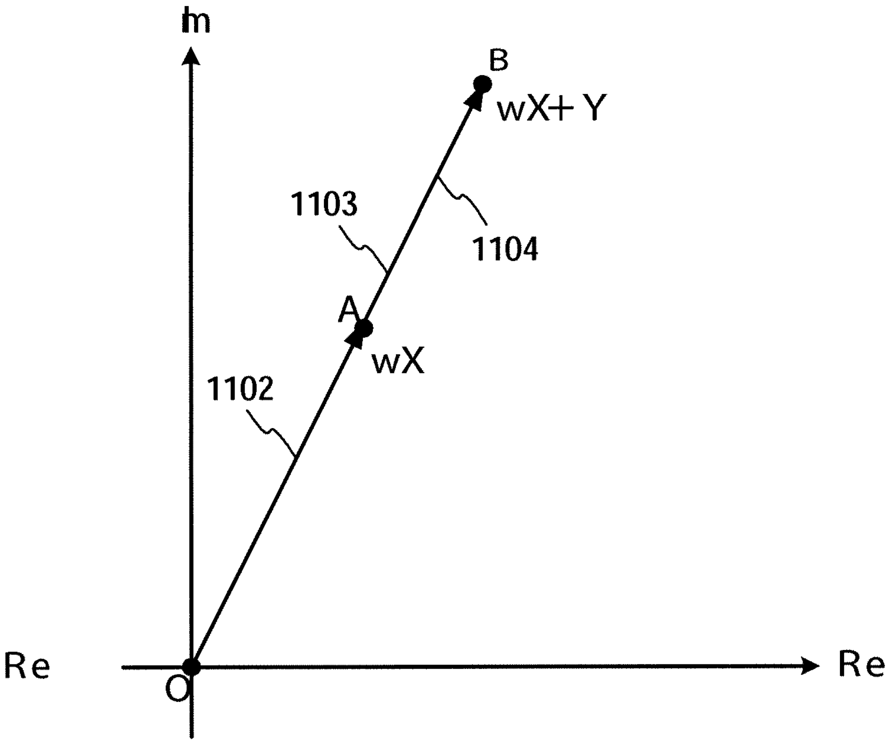


FIG.12B

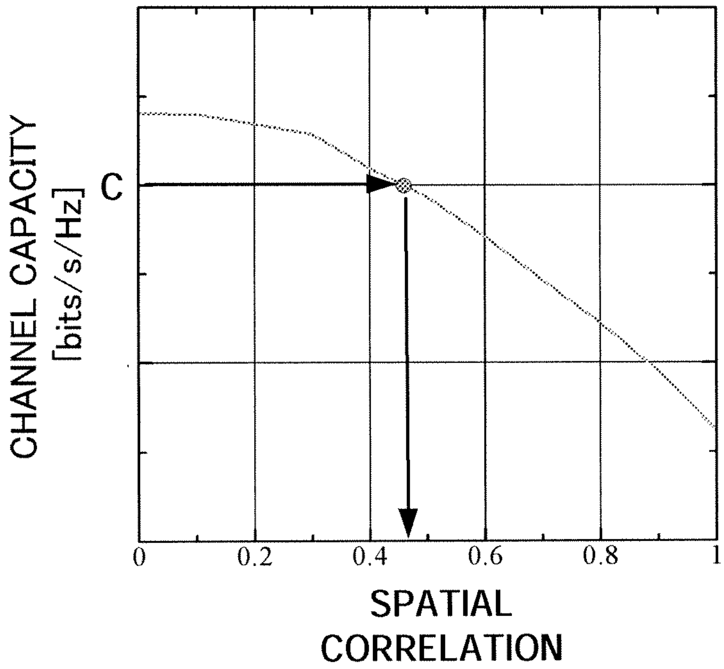


FIG.13A

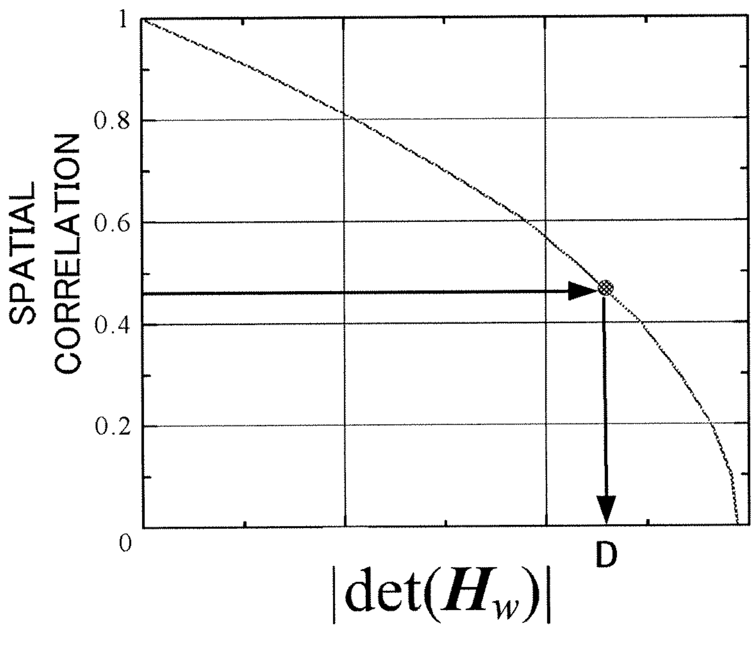


FIG.13B

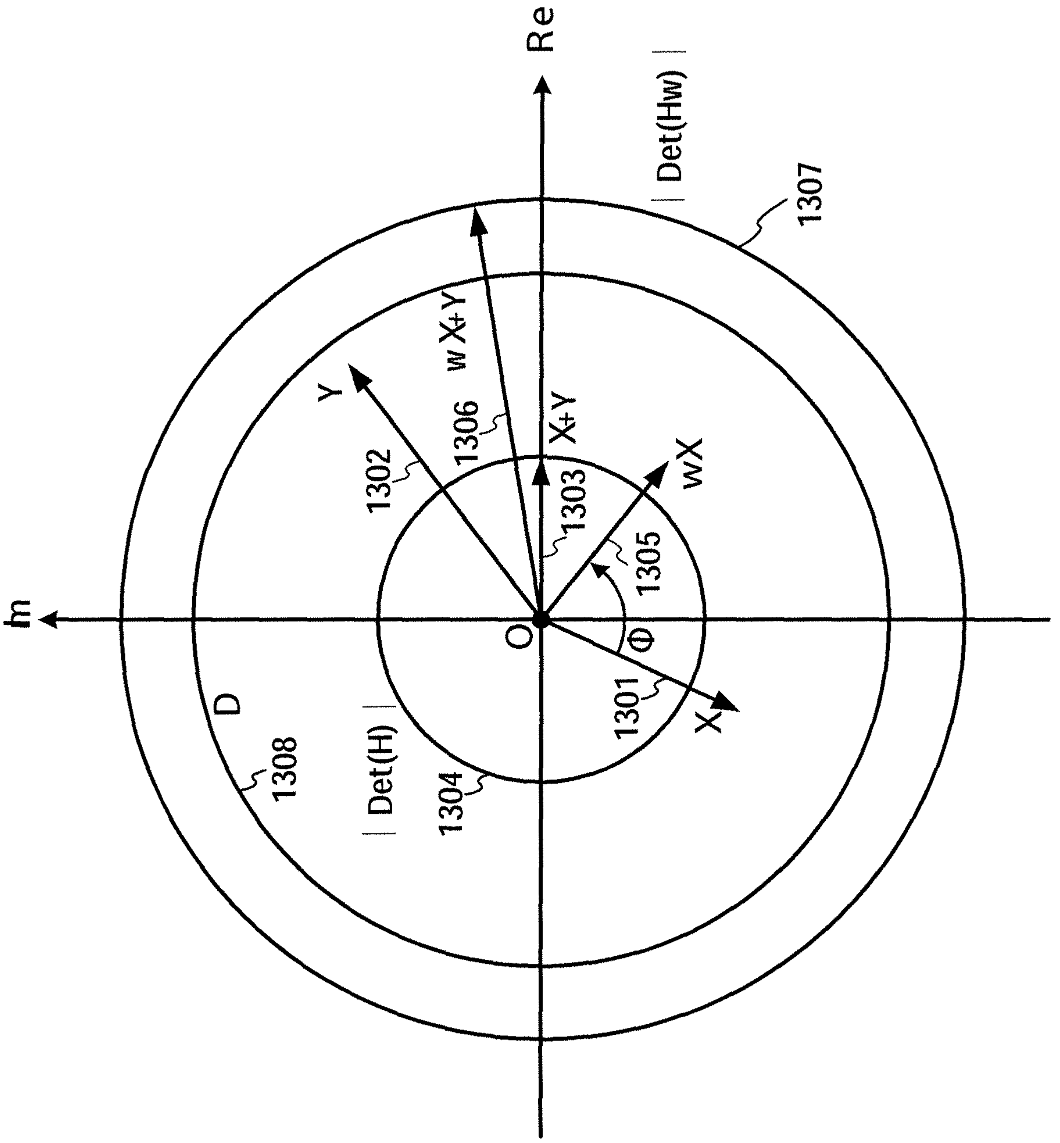
Re
Im
O
X
Y
wX
X+Y
w X+Y
Φ
D
| Det(H) |
| Det(Hw) |
1301
1302
1303
1304
1305
1306
1307
1308

FIG.14

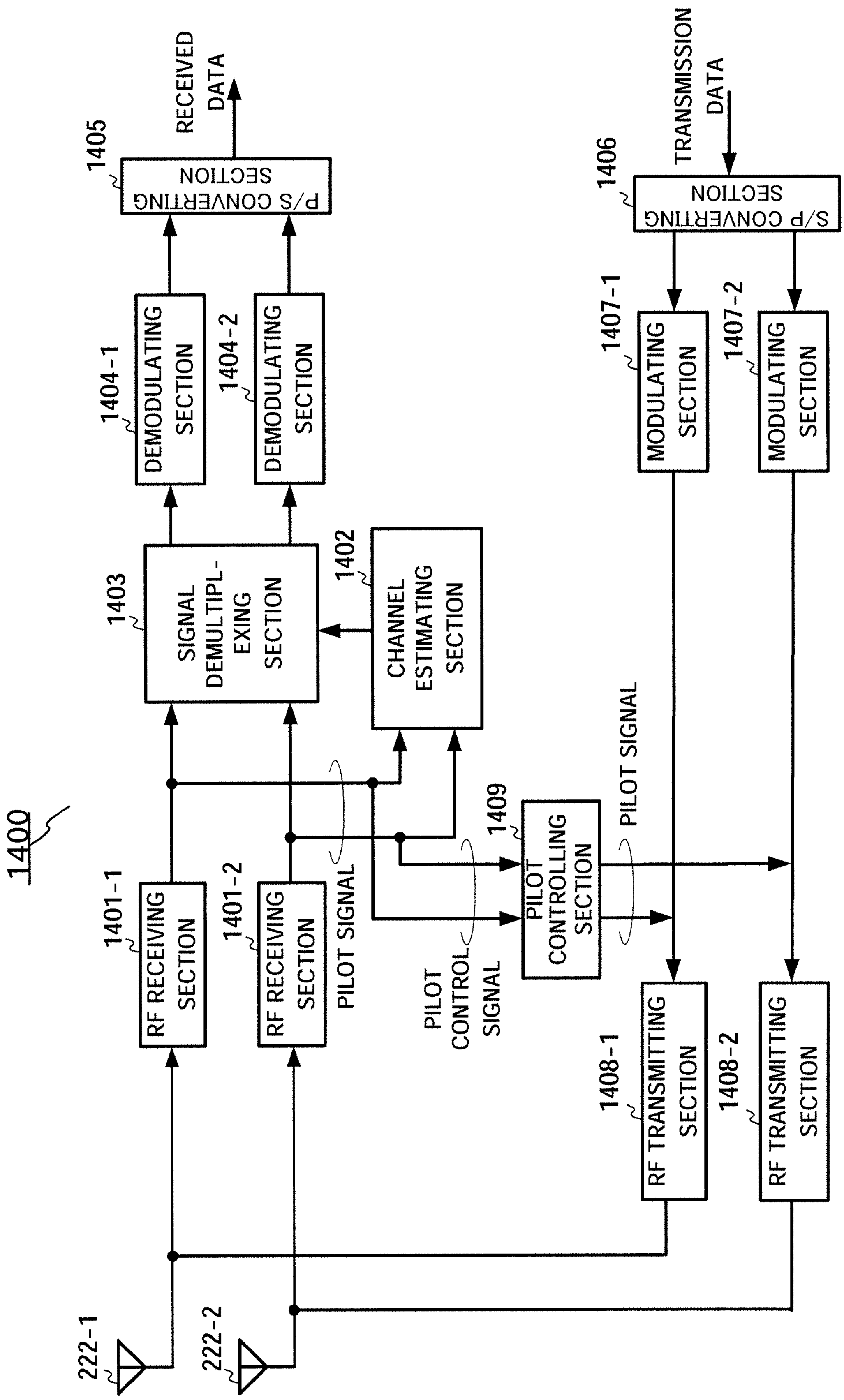
1400
222-1
222-2
1401-1
RF RECEIVING SECTION
1401-2
RF RECEIVING SECTION
PILOT SIGNAL
1403
SIGNAL DEMULTIPL-EXING SECTION
1402
CHANNEL ESTIMATING SECTION
1404-1
DEMODULATING SECTION
1404-2
DEMODULATING SECTION
1405
P/S CONVERTING SECTION
RECEIVED DATA
PILOT CONTROL SIGNAL
1409
PILOT CONTROLLING SECTION
PILOT SIGNAL
1406
S/P CONVERTING SECTION
TRANSMISSION DATA
1407-1
MODULATING SECTION
1407-2
MODULATING SECTION
1408-1
RF TRANSMITTING SECTION
1408-2
RF TRANSMITTING SECTION

FIG.15

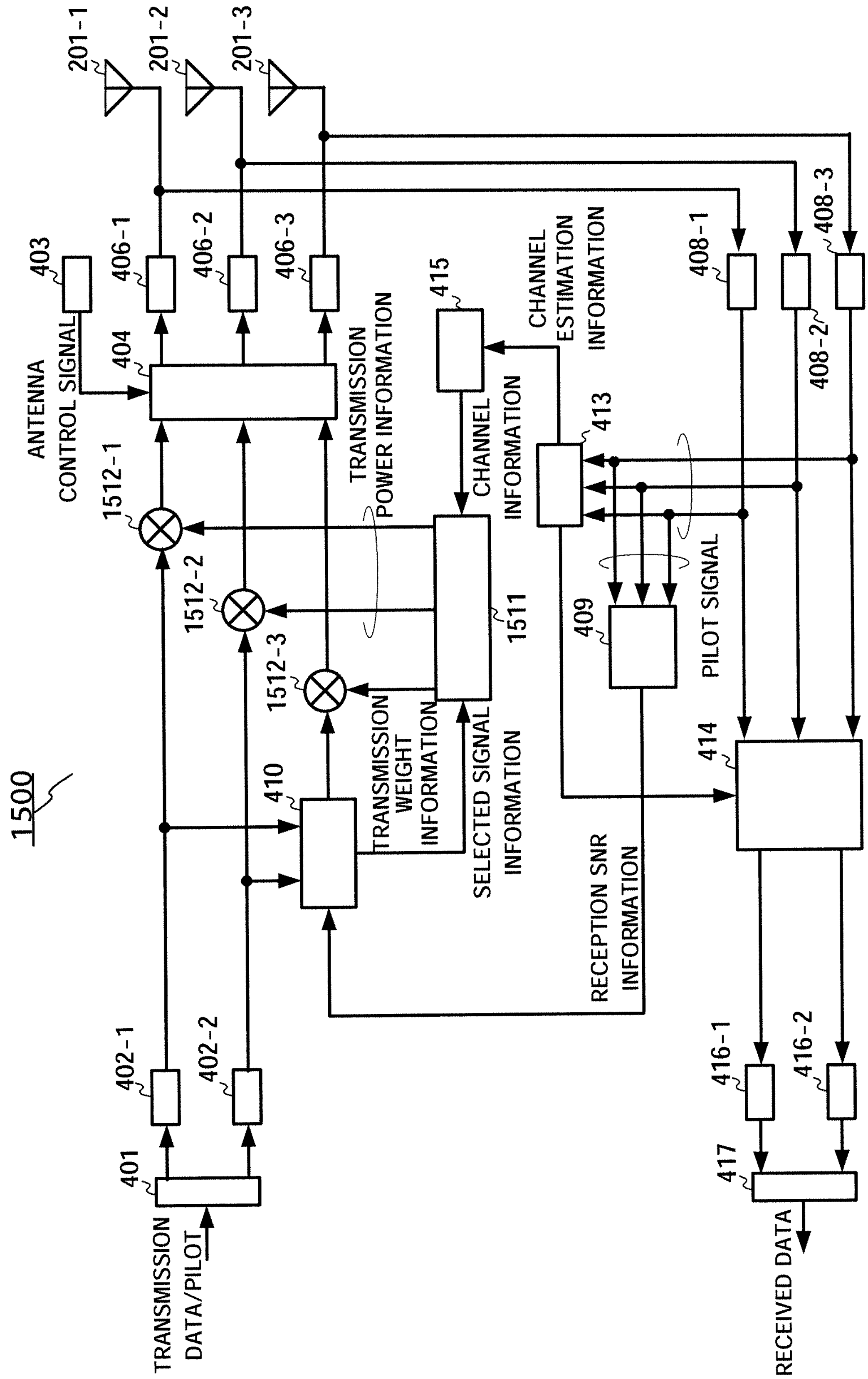
1500
201-1
201-2
201-3
403
406-1
406-2
406-3
ANTENNA
CONTROL SIGNAL
404
TRANSMISSION
POWER INFORMATION
415
CHANNEL
ESTIMATION
INFORMATION
408-1
408-2
408-3
1512-1
1512-2
1512-3
CHANNEL
INFORMATION
413
1511
409
PILOT SIGNAL
410
TRANSMISSION
WEIGHT
INFORMATION
SELECTED SIGNAL
INFORMATION
414
RECEPTION SNR
INFORMATION
402-1
402-2
401
TRANSMISSION
DATA/PILOT
416-1
416-2
417
RECEIVED DATA

FIG.16

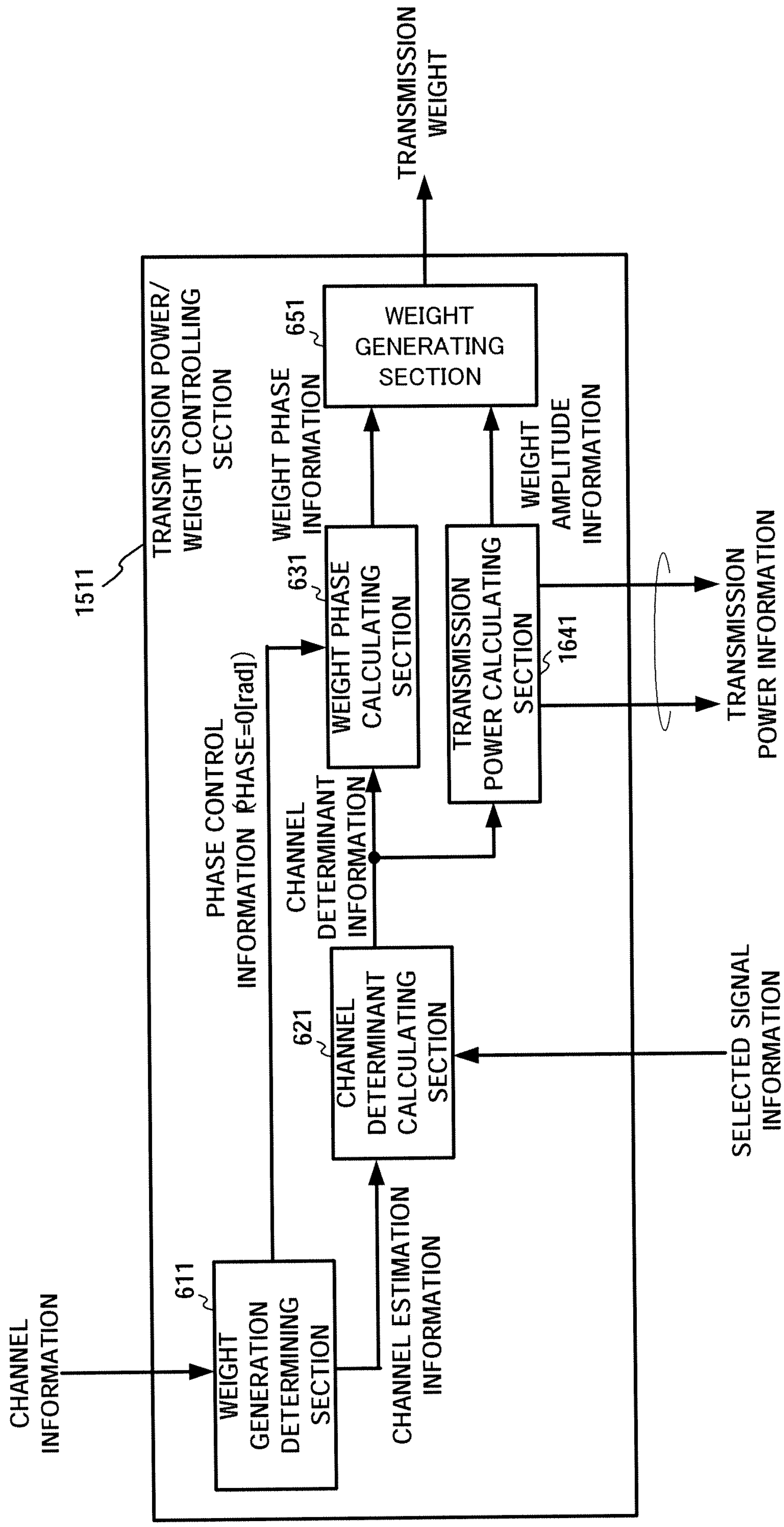

TRANSMISSION WEIGHT
1511
TRANSMISSION POWER/ WEIGHT CONTROLLING SECTION
651
WEIGHT GENERATING SECTION
WEIGHT PHASE INFORMATION
WEIGHT AMPLITUDE INFORMATION
631
WEIGHT PHASE CALCULATING SECTION
TRANSMISSION POWER CALCULATING SECTION
1641
TRANSMISSION POWER INFORMATION
PHASE CONTROL INFORMATION (PHASE=0[rad])
CHANNEL DETERMINANT INFORMATION
621
CHANNEL DETERMINANT CALCULATING SECTION
SELECTED SIGNAL INFORMATION
CHANNEL INFORMATION
611
WEIGHT GENERATION DETERMINING SECTION
CHANNEL ESTIMATION INFORMATION


FIG.17

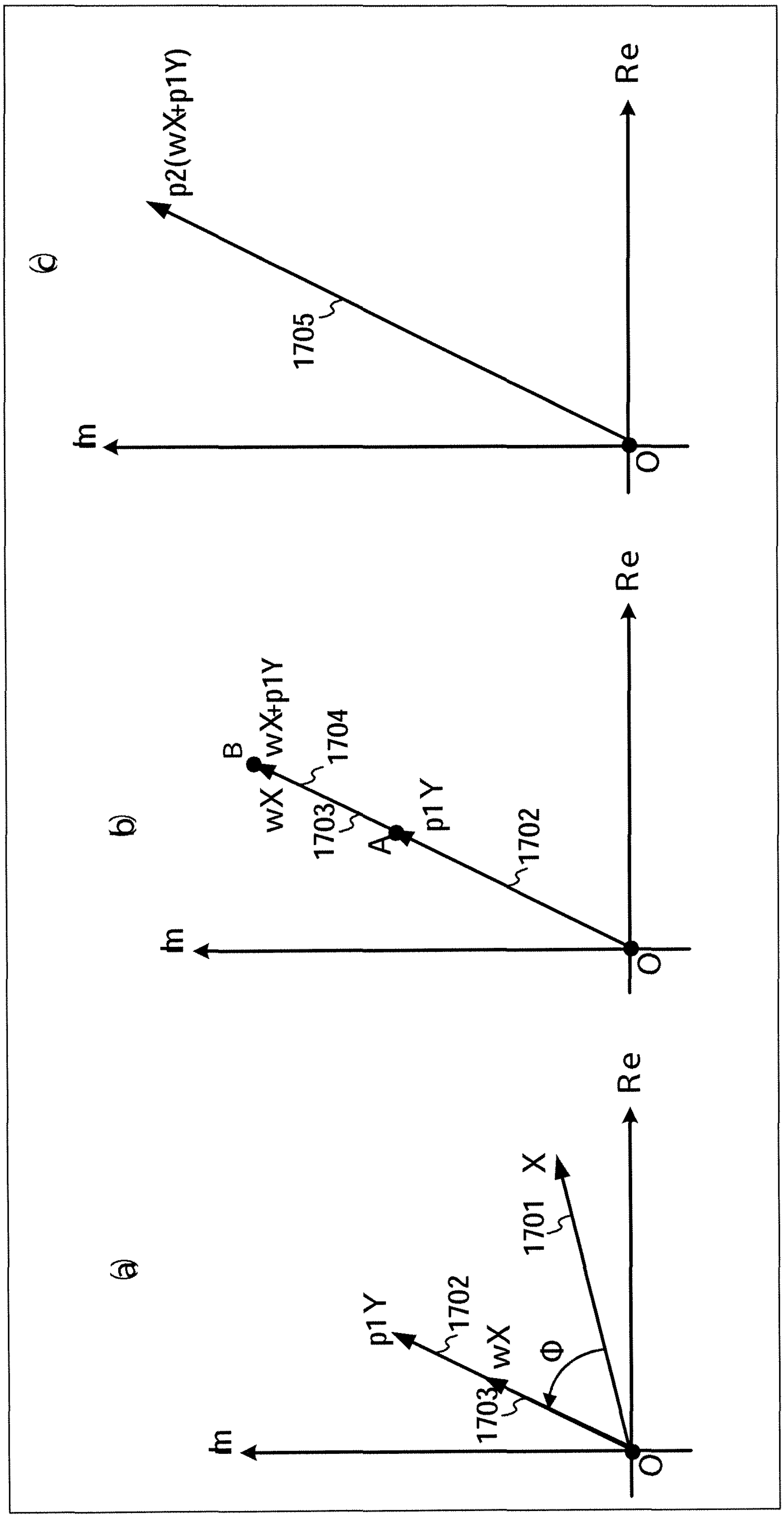

(a)
Im
Re
O
X
1701
Φ
wX
1703
p1Y
1702
(b)
Im
Re
O
1702
A
p1Y
1703
wX
B
wX+p1Y
1704
(c)
Im
Re
O
1705
p2(wX+p1Y)


FIG.18

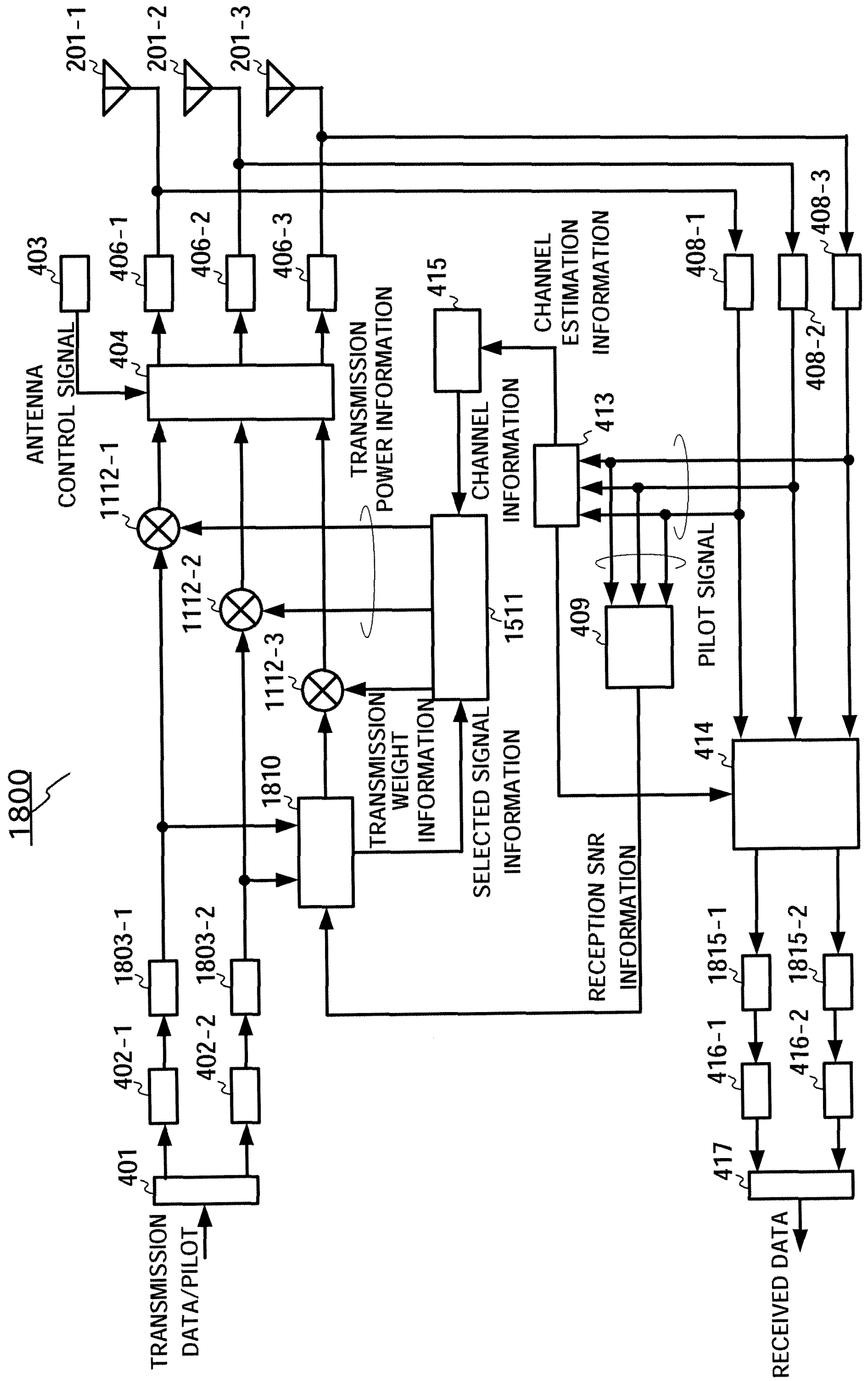
1800
201-1
201-2
201-3
403
406-1
406-2
406-3
408-1
408-2
408-3
ANTENNA CONTROL SIGNAL
404
415
CHANNEL ESTIMATION INFORMATION
1112-1
1112-2
1112-3
TRANSMISSION POWER INFORMATION
CHANNEL INFORMATION
413
1511
409
PILOT SIGNAL
TRANSMISSION WEIGHT INFORMATION
SELECTED SIGNAL INFORMATION
1810
414
RECEPTION SNR INFORMATION
1803-1
1803-2
402-1
402-2
401
TRANSMISSION DATA/PILOT
1815-1
1815-2
416-1
416-2
417
RECEIVED DATA

FIG.19

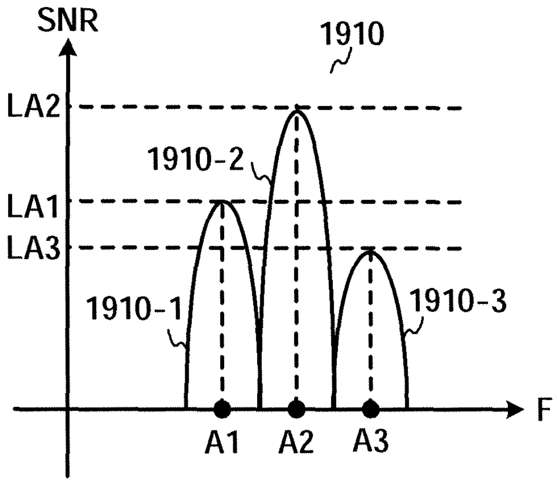


FIG.20A

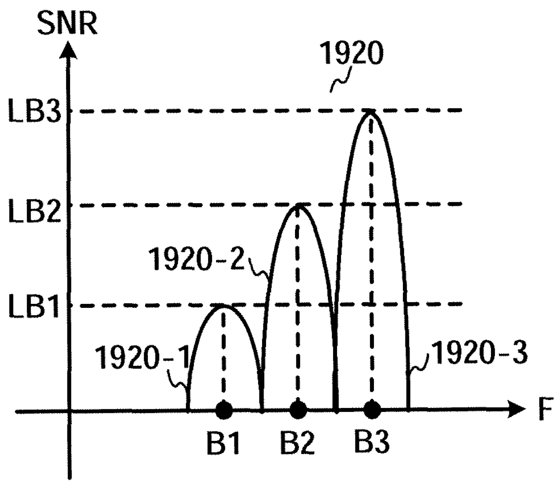


FIG.20B

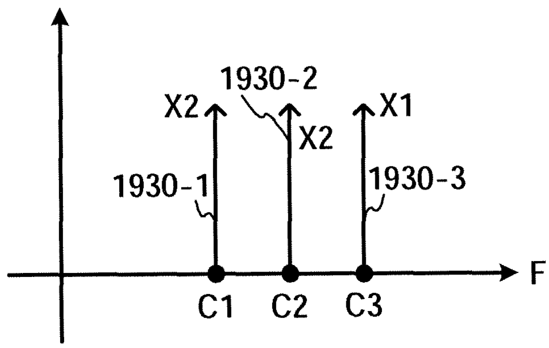


FIG.20C

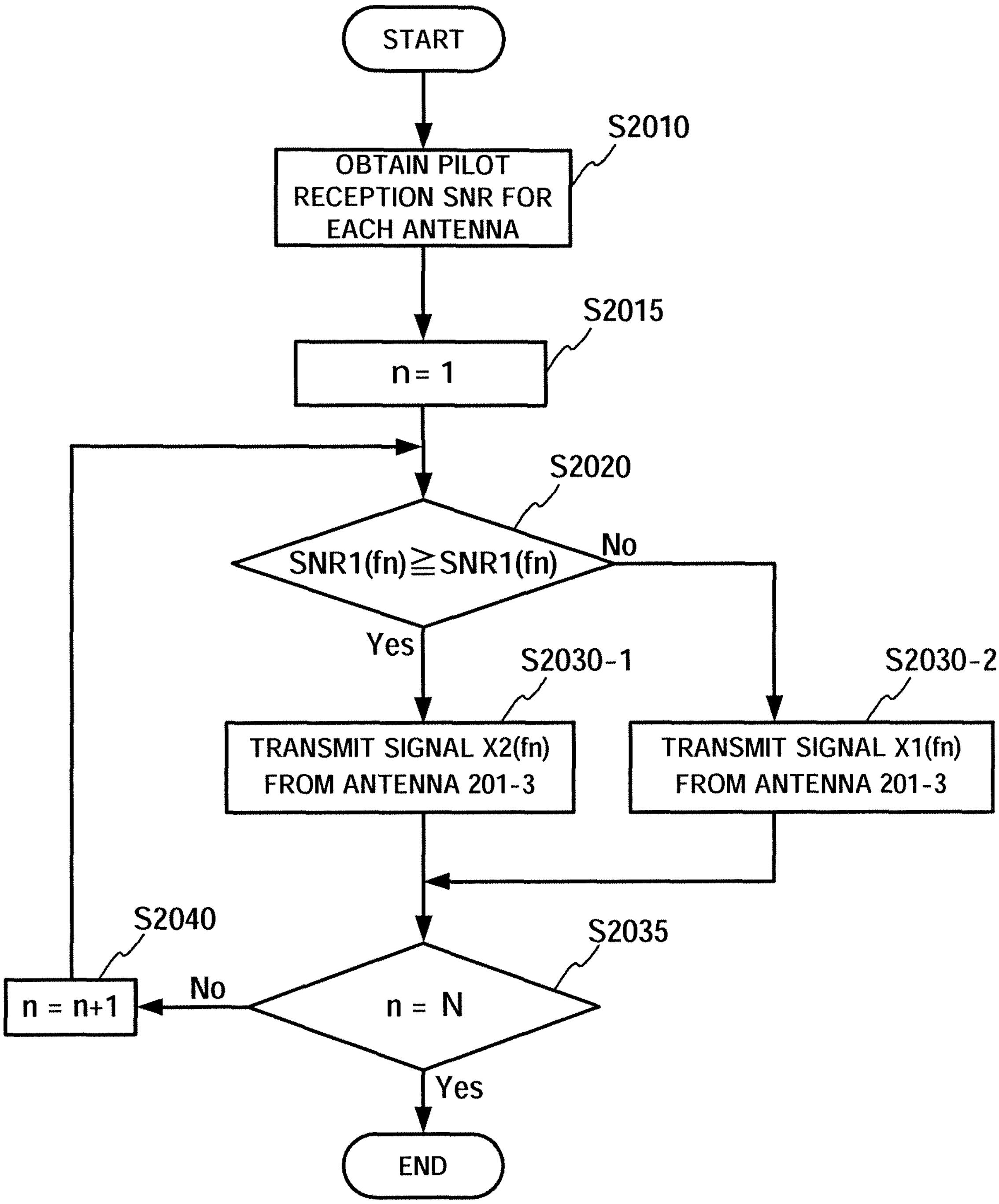
START
S2010
OBTAIN PILOT RECEPTION SNR FOR EACH ANTENNA
S2015
n = 1
S2020
SNR1(fn)≧SNR1(fn)
No
Yes
S2030-1
S2030-2
TRANSMIT SIGNAL X2(fn) FROM ANTENNA 201-3
TRANSMIT SIGNAL X1(fn) FROM ANTENNA 201-3
S2040
S2035
n = n+1
No
n = N
Yes
END

FIG.21

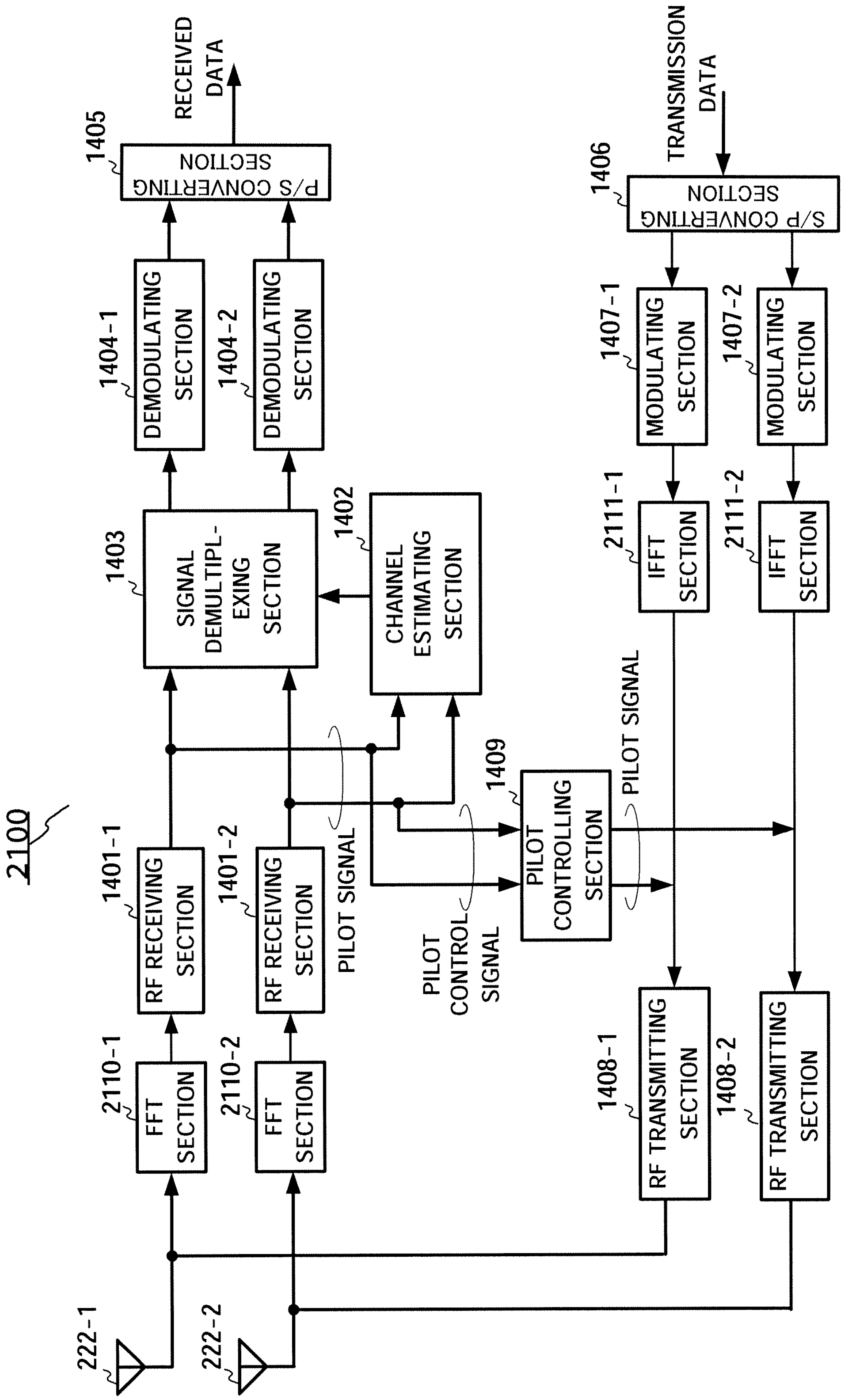
2100
222-1
222-2
2110-1
FFT SECTION
2110-2
FFT SECTION
1401-1
RF RECEIVING SECTION
1401-2
RF RECEIVING SECTION
PILOT SIGNAL
PILOT CONTROL SIGNAL
1403
SIGNAL DEMULTIPLEXING SECTION
1402
CHANNEL ESTIMATING SECTION
1409
PILOT CONTROLLING SECTION
PILOT SIGNAL
1404-1
DEMODULATING SECTION
1404-2
DEMODULATING SECTION
1405
P/S CONVERTING SECTION
RECEIVED DATA
TRANSMISSION DATA
1406
S/P CONVERTING SECTION
1407-1
MODULATING SECTION
1407-2
MODULATING SECTION
2111-1
IFFT SECTION
2111-2
IFFT SECTION
1408-1
RF TRANSMITTING SECTION
1408-2
RF TRANSMITTING SECTION

FIG.22

**INTERNATIONAL SEARCH REPORT**

International application No.
PCT/JP2006/306726

A. CLASSIFICATION OF SUBJECT MATTER
*H04B7/06*(2006.01), *H04B7/10*(2006.01), *H04J11/00*(2006.01), *H04J15/00*(2006.01)

According to International Patent Classification (IPC) or to both national classification and IPC

B. FIELDS SEARCHED

Minimum documentation searched (classification system followed by classification symbols)
H04B7/06, H04B7/10, H04J11/00, H04J15/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2003-284128 A (Sanyo Electric Co., Ltd.), 03 October, 2003 (03.10.03), Full text; Figs. 1 to 22 & WO 2003/081806 A1 & EP 1489758 A1 & US 2005/0181831 A1 | 1-10 |
| Y | JP 2003-218756 A (Sony Corp.), 31 July, 2003 (31.07.03), Full text; Figs. 1 to 14 (Family: none) | 1-10 |
| Y | JP 2005-065242 A (Matsushita Electric Industrial Co., Ltd.), 10 March, 2005 (10.03.05), Full text; Figs. 1 to 12 & WO 2005/011172 A1 | 2-7,9,10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 May, 2006 (02.05.06) | 16 May, 2006 (16.05.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2006/306726

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-166232 A (Mitsubishi Electric Research Laboratories, Inc.), 10 June, 2004 (10.06.04), Full text; Figs. 1 to 3 & US 2004/0032910 A1 | 5,10 |
| X | JP 2004-007279 A (Matsushita Electric Industrial Co., Ltd.), 08 January, 2004 (08.01.04), Full text; Figs. 1 to 9 & WO 2003/103188 A1 & EP 1511191 A1 & US 2005/0213538 A1 | 11 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003528527 A
- JP 2005097399 A